# EUROPÄISCHE PATENTANMELDUNG

(11) **EP 4 220 189 A1**
(43) Veröffentlichungstag der Anmeldung: **02.08.2023**
(21) Anmeldenummer: 23168506.6
(22) Anmeldetag: 26.10.2021
(51) Int. Cl.: G01P 15/09

(54) **BESCHLEUNIGUNGSAUFNEHMER**

(30) Priorität: 02.11.2020 EP 20205225
(62) Teilanmeldung aus: 21204672.6
(71) Anmelder: Kistler Holding AG, 8408 Winterthur (CH)
(72) Erfinder: Laffranchi, Marco, 8408 Winterthur (CH); Frommenwiler, Tobias, 8406 Winterthur (CH); Weber, David, 8472 Seuzach (CH)

(57) **Zusammenfassung**

Die Erfindung betrifft einen Beschleunigungsaufnehmer (1) mit mindestens einem Piezoelement (10, 10', 10''), mit mindestens einer seismischen Masse (11, 11', 11") und mit einem Grundkörper (12); welcher Beschleunigungsaufnehmer (1) in einem rechtwinkligen Koordinatensystem mit drei Achsen (x, y, z) angeordnet ist, wobei eine der drei Achsen (x, y, z) eine Vertikalachse (z) ist; und welcher Grundkörper (12) tangentiale Seitenflächen (12.1, 12.2, 12.3, 12.4) und normale Seitenflächen (12.6, 12.7) aufweist, welche tangentialen Seitenflächen (12.1, 12.2, 12.3, 12.4) tangential zur Vertikalachse (z) angeordnet sind, und welche normalen Seitenflächen (12.6, 12.7) normal zur Vertikalachse (z) angeordnet sind; wobei der Beschleunigungsaufnehmer (1) genau drei Piezoelemente (10, 10', 10") und drei seismische Massen (11, 11', 11'') aufweist; wobei an jeder von drei tangentialen Seitenflächen (12.1, 12.2, 12.3) genau ein Piezoelement (10, 10', 10") befestigt ist; wobei an jedem der drei Piezoelemente (10, 10', 10'') genau eine seismische Masse (11, 11', 11'') befestigt ist und bei Beschleunigung eine der Beschleunigung proportionale Scherkraft auf das Piezoelement (10, 10', 10") ausübt; wobei jedes der drei Piezoelemente (10, 10', 10'') eine hohe Empfindlichkeit für eine von der an ihm befestigten seismischen Masse (11) ausgeübte Scherkraft entlang einer Haupttangentialachse (h) aufweist, welche Haupttangentialachse (h) für jedes der drei Piezoelemente (10, 10', 10") eine Andere der drei Achsen (x, y, z) ist.

## Beschreibung

### Technisches Gebiet

Die Erfindung betrifft einen Beschleunigungsaufnehmer nach dem Oberbegriff des unabhängigen Anspruchs.

### Stand der Technik

Beschleunigungen eines physischen Gegenstands werden in vielen sehr unterschiedlichen Anwendungen wie Robotik, Energieerzeugung, Transport, usw. erfasst. Dabei werden auf den physischen Gegenstand einwirkende Schocks und Vibrationen des physischen Gegenstands als Beschleunigungen erfasst. Die Beschleunigungen werden als Vielfaches der Fallbeschleunigung g=9.81msec⁻² angegeben. Typische Grössenordnungen der erfassten der Beschleunigungen sind +/-500g bei Messbereichen von 2Hz bis 10kHz. Zur Erfassung der Beschleunigungen wird ein Beschleunigungsaufnehmer an dem physischen Gegenstand befestigt.

Die Schrift CH399021A1 zeigt einen solchen Beschleunigungsaufnehmer mit einer seismischen Masse, einem piezoelektrischen System und ein Grundkörper. Zum Schutz vor schädlichen Umwelteinflüssen weist der Beschleunigungsaufnehmer ein Gehäuse auf, in dem die seismische Masse, das piezoelektrischen System und der Grundkörper angeordnet sind. Über das Gehäuse ist der Beschleunigungsaufnehmer am physischen Gegenstand befestigt. Bei Beschleunigung übt die seismische Masse eine ihrer Beschleunigung proportionale Kraft auf das piezoelektrische System aus. Das piezoelektrische System weist mehrere flache Scheiben aus piezoelektrischem Material mit einer hohen Empfindlichkeit für den piezoelektrischen Longitudinaleffekt auf. Unter der Wirkung der Kraft erzeugt das piezoelektrische Material piezoelektrische Ladungen, eine Menge der erzeugten piezoelektrischen Ladungen ist proportional zur Grösse der Kraft. Beim piezoelektrischen Longitudinaleffekt werden piezoelektrische Ladungen auf den gleichen Stirnflächen der Scheiben erzeugt, auf die auch die Kraft als Normalkraft wirkt. Jede Scheibe hat zwei Stirnflächen, auf denen piezoelektrische Ladungen mit entgegengesetzter Polarität erzeugt werden. Dann weist das piezoelektrische System auch dünne Elektroden aus elektrisch leitfähigem Material auf, um die piezoelektrischen Ladungen von den zwei Stirnflächen abzugreifen. Jede Elektrode hat eine Oberfläche von der Grösse einer Stirnfläche. Mit der Oberfläche liegt die Elektrode direkt und vollflächig auf der Stirnfläche an. Zudem ist das piezoelektrische System mittels einer Vorspannhülse zwischen der seismischen Masse und dem Grundkörper mechanisch vorgespannt. Durch die mechanische Vorspannung werden mikroskopisch kleine Poren zwischen den Stirnflächen und den Elektroden geschlossen, so dass alle erzeugten piezoelektrischen Ladungen abgegriffen werden, was für eine Linearität des Beschleunigungsaufnehmers wichtig ist, die Linearität ist das Verhältnis aus der Anzahl der piezoelektrischen Ladungen zur Grösse der Kraft. Die piezoelektrischen Ladungen sind als Beschleunigungssignale elektrisch ableitbar. Elektrisch abgeleitete Beschleunigungssignale lassen sich in einer Wandlereinheit elektrisch wandeln.

Auch die Schrift DE69405962T2 beschreibt einen Beschleunigungsaufnehmer mit einer seismischen Masse und einem piezoelektrischen System auf einer Leiterplatte. Der Beschleunigungsaufnehmer erfasst Beschleunigungen gemäss dem transversalen Schubeffekt als Scherkraft entlang einer Achse. Das piezoelektrische System ist zwischen der seismischen Masse und der Leiterplatte angeordnet. Die Wandlereinheit befindet sich auf der Leiterplatte.

Nun ist das piezoelektrische System der Schrift CH399021A1 nur für eine Normalkraft entlang einer Achse empfindlich. Und auch piezoelektrische System der Schrift DE69405962T2 nur für eine Scherkraft entlang einer Achse empfindlich. das Wünschenswert sind jedoch Beschleunigungsaufnehmer, die Beschleunigungen entlang von mehreren Achsen eines rechtwinkligen Koordinatensystems gleichzeitig erfassen können.

Die Schrift RU1792537C1 offenbart einen Beschleunigungsaufnehmer, der die Beschleunigungen in drei physikalischen Dimensionen erfassen kann. An einem würfelförmigen Grundkörper mit sechs Oberflächen sind ein piezoelektrisches System mit sechs flachen Scheiben aus piezoelektrischem Material und sechs seismische Massen angebracht. Jeweils zwei Oberflächen sind normal zu einer von drei senkrecht aufeinander stehenden Achsen ausgerichtet, diese Achse wird nachfolgend Normalachse genannt. An jeder der sechs Oberflächen ist eine flache Scheibe zwischen der Oberfläche und einer seismischen Masse angeordnet. Die Scheiben sind durch ein äusseres Vorspanngehäuse gegen den Grundkörper mechanisch vorgespannt. Somit hat das piezoelektrische System für jede von drei Normalachsen ein Paar Scheiben. Die Scheiben weisen eine hohe Empfindlichkeit für den transversalen Schubeffekt auf. Beim transversalen Schubeffekt werden auf den gleichen Stirnflächen der Scheiben, auf die eine Scherkraft tangential zur Normalachse wirkt, piezoelektrische Ladungen erzeugt, diese Achse wird nachfolgend Haupttangentialachse genannt. Das piezoelektrische System weist auch Elektroden aus elektrisch leitfähigem Material auf, um die piezoelektrischen Ladungen von den Stirnflächen der Scheiben abzugreifen.

Gemäss der Schrift RU1792537C1 weist das piezoelektrische System für jede von drei Normalachsen ein Paar Scheiben aus piezoelektrischem Material mit hoher Empfindlichkeit für eine Scherkraft entlang einer Haupttangentialachse auf.

Leider lässt es sich nicht vermeiden, dass das piezoelektrische Material eine mehr oder weniger hohe Empfindlichkeit für Scherkräfte entlang von unterschiedlichen Achsen aufweist. So weist piezoelektrisches Material mit hoher Empfindlichkeit für eine Scherkraft entlang der Haupttangentialachse auch eine, wenn auch geringe Empfindlichkeit für eine Scherkraft entlang einer Achse senkrecht zur Haupttangentialachse und senkrecht zur Normalachse auf, diese Achse wird nachfolgend Nebentangentialachse genannt. Beide Scherkräfte, diejenige entlang der Haupttangentialachse und diejenige entlang der Nebentangentialachse erzeugen piezoelektrische Ladungen auf den Stirnflächen der Scheiben. Um ein Beispiel zu nennen, Quarz als piezoelektrisches Material weist eine hohe Empfindlichkeit für die Scherkraft entlang der Haupttangentialachse auf, die um einen Faktor 7 höher ist als die geringe Empfindlichkeit für die Scherkraft entlang der Nebentangentialachse.

Die geringe Empfindlichkeit des piezoelektrischen Materials für die Scherkraft entlang der Nebentangentialachse kann daher die Erfassung der Scherkraft entlang der Haupttangentialachse verfälschen, die entsprechenden piezoelektrischen Ladungen werden im Folgenden piezoelektrische Störladungen bezeichnet. Um diese Verfälschung zu vermeiden ist gemäss der Schrift RU1792537C1 für jede der drei Normalachsen das Paar Scheiben mit entgegengesetzter Polarität elektrisch in Reihe geschaltet. Dies hat den Vorteil, dass eine entlang der Nebentangentialachse wirkende Scherkraft auf den Stirnflächen der zwei Scheiben jeweils gleich viele piezoelektrische Störladungen erzeugt, welche piezoelektrischen Störladungen jedoch entgegengesetzter Polarität haben und sich durch den Abgriff in Reihenschaltung neutralisieren.

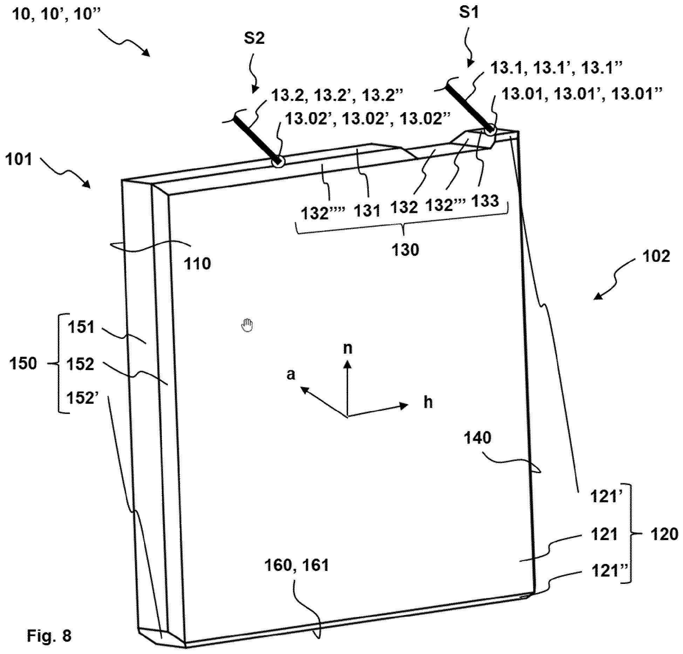

Auch die Schrift EP054680A1 beschreibt einen Beschleunigungsaufnehmer, welcher Beschleunigungen mit einem piezoelektrischen System nach dem transversalen Schubeffekt mit hoher Empfindlichkeit als Scherkräfte entlang von drei senkrecht aufeinander stehenden Haupttangentialachsen erfasst. In einer Ausführungsform nach Fig. 8 besteht das piezoelektrische System aus sechs Scheiben aus piezoelektrischem Material, für jede der drei Haupttangentialachsen ist ein Paar Scheiben mit entgegengesetzter Polarität elektrisch in Reihe geschaltet. Der Beschleunigungsaufnehmer benötigt nur drei seismische Massen, eine für jede der drei Haupttangentialachsen. Durch den Abgriff in Reihenschaltung werden für jede der drei Haupttangentialachsen piezoelektrische Störladungen, welche von Scherkräften entlang der Nebentangentialachsen stammen, neutralisiert.

Und auch die Schrift US5539270A1 bezieht sich auf einen Beschleunigungsaufnehmer zur Erfassung von Beschleunigungen in drei physikalischen Dimensionen. Für jede Dimension ist ein piezoelektrisches System vorgesehen, jedes piezoelektrische System weist zwei Platten aus piezoelektrischem Material auf. Die zwei Platten sind über gegeneinander gerichtete Stirnflächen stoffschlüssig miteinander verbunden. Die stoffschlüssige Verbindung ist elektrisch isolierend. Auf voneinander weggerichteten Stirnflächen der Platten sind Elektroden angebracht, welche unter der Wirkung einer Normalkraft erzeugte piezoelektrischen Ladungen abgreifen. Die drei piezoelektrischen Systeme sind an einem Träger mechanisch befestigt. Der Träger weist elektrische Leiter auf, welche die piezoelektrischen Ladungen von den Elektroden ableiten. Seismische Massen sind nicht vorgesehen.

Für eine Befestigung des Beschleunigungsaufnehmers am physischen Gegenstand ist oft wenig Platz vorhanden. Der Beschleunigungsaufnehmer soll daher kleine äussere Abmessung von kleiner 50cm³ haben. Auch sind Messfrequenzen von mehr als 10kHz erwünscht. Und da eine Resonanzfrequenz des Beschleunigungsaufnehmers umgekehrt proportional zu dessen Gewicht ist, soll er deshalb ein geringes Gewicht haben.

Die Schrift CN201152880Y zeigt einen Beschleunigungsaufnehmer mit einem piezoelektrischen System, einer seismischen Masse und einem Grundkörper. Der Grundkörper ist zylinderförmig und endet entlang einer Vertikalachse in einer normalen Stirnfläche. Entlang einer Normalachse, welche senkrecht zur Vertikalachse steht ist das piezoelektrische System über eine Vorspannhülse zwischen dem Grundkörper und der seismischen Masse mechanisch vorgespannt. Die Vorspannhülse ist hohlzylinderförmig und endet mit einer Mantelfläche in einer Ebene der normalen Stirnfläche des Grundkörpers. Die seismische Masse ist scheibenförmig und endet mit einer Mantelfläche ebenfalls in der Ebene der normalen Stirnfläche des Grundkörpers. Eine Wandlereinheit in der Ausführungsform eines Ladungsverstärkers ist in dieser Ebene auf den Mantelflächen von Vorspannhülse und seismischer Masse sowie auf der normalen Stirnfläche des Grundkörpers angeordnet, was platzsparend ist.

Nachteilig an dieser Anordnung der Wandlereinheit auf Mantelflächen von Vorspannhülse und seismischer Masse sowie auf der normalen Stirnfläche des Grundkörpers ist die Bildung eines Kraftnebenschlusses zwischen der seismischen Masse und dem Grundkörper. Die seismische Masse kann somit nicht mehr unter der Wirkung einer Beschleunigung frei schwingen, somit wird eine aufgrund der Trägheit der seismischen Masse auf das piezoelektrische System ausgeübte Kraft gehemmt, wodurch die Kraft nicht mehr proportional zur Beschleunigung ist, und die vom piezoelektrischen Material erzeugten piezoelektrischen Ladungen ebenfalls nicht mehr proportional zur zu erfassenden Beschleunigung sind. Der Kraftnebenschluss verfälscht somit die Erfassung der Beschleunigung.

Eine erste Aufgabe der vorliegenden Erfindung ist es, einen Beschleunigungsaufnehmer bereitzustellen, der eine Beschleunigung in mehreren physikalischen Dimensionen gleichzeitig erfassen kann. Die Erfindung stellt sich die zweite Aufgabe, einen Beschleunigungsaufnehmer aufzuzeigen, der eine Beschleunigung möglichst unverfälscht erfasst. Als dritte Aufgabe der Erfindung soll der Beschleunigungsaufnehmer eine kleine äussere Abmessung sowie ein geringes Gewicht haben. Die vierte Aufgabe der Erfindung besteht darin, einen Beschleunigungsaufnehmer für hohe Messfrequenzen von mehr als 10kHz bereitzustellen. Und als fünfte Aufgabe der Erfindung soll der Beschleunigungsaufnehmer kostengünstig herstellbar sein.

### Darstellung der Erfindung

Zumindest eine der Aufgaben wird durch die Merkmale des unabhängigen Anspruchs gelöst.

Die Erfindung betrifft einen Beschleunigungsaufnehmer mit mindestens einem Piezoelement, mit mindestens einer seismischen Masse und mit einem Grundkörper; welcher Beschleunigungsaufnehmer in einem rechtwinkligen Koordinatensystem mit drei Achsen angeordnet ist, wobei eine der drei Achsen eine Vertikalachse ist; und welcher Grundkörper tangentiale Seitenflächen und normale Seitenflächen aufweist, welche tangentialen Seitenflächen tangential zur Vertikalachse angeordnet sind, und welche normalen Seitenflächen normal zur Vertikalachse angeordnet sind; wobei der Beschleunigungsaufnehmer genau drei Piezoelemente und drei seismische Massen aufweist; wobei an jeder von drei tangentialen Seitenflächen genau ein Piezoelement befestigt ist; wobei an jedem der drei Piezoelemente genau eine seismische Masse befestigt ist und bei Beschleunigung eine der Beschleunigung proportionale Scherkraft auf das Piezoelement ausübt; wobei jedes der drei Piezoelemente eine hohe Empfindlichkeit für eine von der an ihm befestigten seismischen Masse ausgeübte Scherkraft entlang einer Haupttangentialachse aufweist, welche Haupttangentialachse für jedes der drei Piezoelemente eine Andere der drei Achsen ist.

Der erfindungsgemässe Beschleunigungsaufnehmer kann somit eine Beschleunigung entlang von drei Achsen gleichzeitig erfassen.. Dazu ist für jede der drei Achsen genau ein Piezoelement vorgesehen, das eine hohe Empfindlichkeit für die zu erfassende Scherkraft aufweist und die zu erfassende Scherkraft unabhängig von den anderen beiden Piezoelementen erfasst. Der erfindungsgemässe Beschleunigungsaufnehmer baut ausgesprochen kompakt, denn er benötigt nur drei Piezoelemente und drei seismische Massen, und die drei Piezoelemente und drei seismischen Massen sind platzsparend an drei tangentialen Seitenflächen des Grundkörpers angeordnet. Im Unterschied dazu lehrt die Schrift RU1792537C1 die Verwendung von sechs Piezoelementen und sechs seismischen Massen an sechs Oberflächen eines würfelförmigen Grundkörpers. Erfindungsgemäss ist die Anzahl der benötigten Piezoelemente und seismischen Massen also halbiert und auch der Platzbedarf ist dementsprechend reduziert.

Weitere vorteilhafte Ausführungsformen der Erfindung sind Gegenstand der Merkmale der anhängigen Ansprüche.

### Kurze Beschreibung der Zeichnungen

Im Folgenden wird die Erfindung an beispielhaften Ausführungsformen unter Beizug der Figuren näher erklärt. Es zeigen
- Fig. 1: eine Ansicht eines Teils einer ersten Ausführungsform eines Beschleunigungsaufnehmers mit Aufnehmereinheit;
- Fig. 2: eine Ansicht eines Teils einer zweiten Ausführungsform eines Beschleunigungsaufnehmers mit Aufnehmereinheit;
- Fig. 3: eine Ansicht einer Aufnehmereinheit mit Wandlereinheit des Beschleunigungsaufnehmers nach Fig. 1;
- Fig. 4: eine Ansicht einer Aufnehmereinheit mit Wandlereinheit des Beschleunigungsaufnehmers nach Fig.2;
- Fig. 5: eine Explosionsdarstellung eines Teils der Aufnehmereinheit nach Fig. 1 bis 4;
- Fig. 6: eine Draufsicht der Aufnehmereinheit nach Fig. 1 bis 5 unter der Wirkung einer Beschleunigung;
- Fig. 7: eine erste Ansicht einer ersten Ausführungsform eines Piezoelements der Aufnehmereinheit nach Fig. 1 bis 5;
- Fig. 8: eine zweite Ansicht der Ausführungsform des Piezoelements nach Fig. 7;
- Fig. 9: eine erste Ansicht einer zweiten Ausführungsform eines Piezoelements der Aufnehmereinheit nach Fig. 1 bis 5;
- Fig. 10: eine zweite Ansicht der zweiten Ausführungsform des Piezoelements nach Fig. 9;
- Fig. 11: eine schematische Darstellung der Ableitung der piezoelektrischen Ladungen der Aufnehmereinheit nach Fig. 1 bis 5;
- Fig. 12: eine schematische Darstellung eines Hochpassfilters der Wandlereinheit der Aufnehmereinheit nach Fig. 11;
- Fig. 13: eine schematische Darstellung eines Tiefpassfilters der Wandlereinheit der Aufnehmereinheit nach Fig. 11;
- Fig. 14: eine Ansicht eines ersten Schrittes der Montage des Beschleunigungsaufnehmers nach Fig. 2, bei dem Signalleiter in ein Gehäuse geführt werden;
- Fig. 15: eine Ansicht eines zweiten Schrittes der Montage des Beschleunigungsaufnehmers nach Fig. 2, bei dem die Signalleiter im Gehäuse mit Vergussmasse vergossen werden;
- Fig. 16: eine Ansicht eines dritten Schrittes der Montage des Beschleunigungsaufnehmers nach Fig. 2, bei dem die mit Vergussmasse vergossenen Signalleiter im Gehäuse bereichsweise freigelegt werden;
- Fig. 17: eine Ansicht eines vierten Schrittes der Montage des Beschleunigungsaufnehmers nach Fig. 2, bei dem die Aufnehmereinheit in das Gehäuse gesetzt wird; und
- Fig. 18: eine Ansicht eines fünften Schrittes der Montage des Beschleunigungsaufnehmers nach Fig. 2, bei dem die Wandlereinheit der Aufnehmereinheit elektrisch kontaktiert wird.

### Wege zur Ausführung der Erfindung

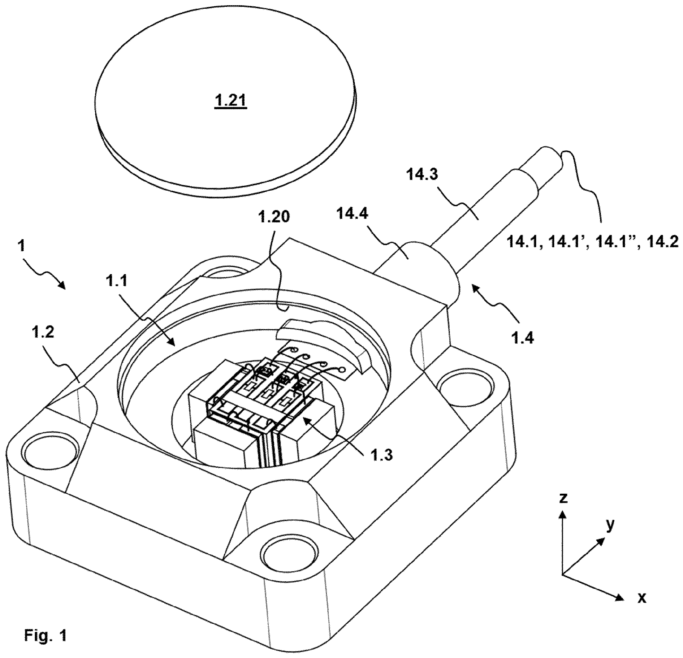

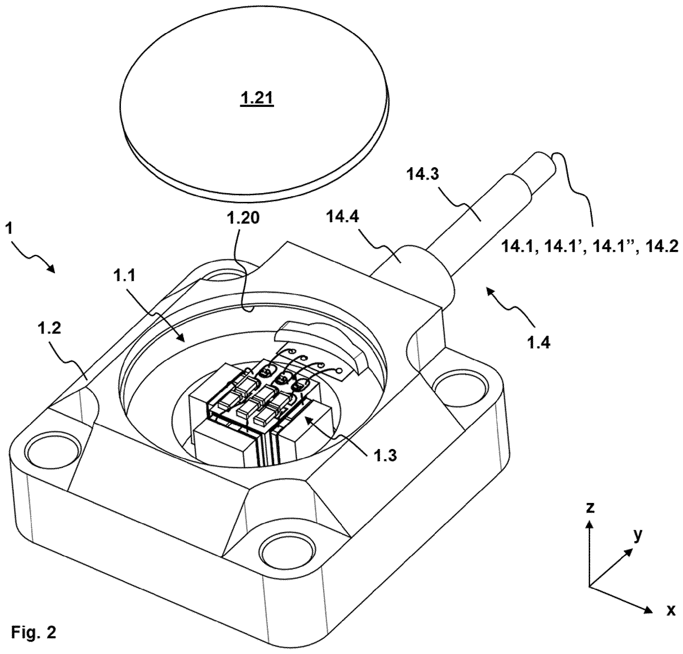

Die Fig. 1 und 2 zeigen einen Teil von zwei Ausführungsformen eines erfindungsgemässen Beschleunigungsaufnehmers 1. Der Beschleunigungsaufnehmer 1 weist eine Aufnehmereinheit 1.1, ein Gehäuse 1.2, eine Wandlereinheit 1.3 und einen Signalausgang 1.4 auf. Der Beschleunigungsaufnehmer 1 ist in einem rechtwinkligen Koordinatensystem mit drei Achsen x, y, z angeordnet, welche auch als Querachse x, Längsachse y und Vertikalachse z bezeichnet werden.

Das Gehäuse 1.2 schützt den Beschleunigungsaufnehmer 1 vor schädlichen Umwelteinflüssen wie Verunreinigungen (Staub, Feuchtigkeit, usw.) und vor elektrischen und elektromagnetischen Störeffekten in Form von elektromagnetischer Strahlung. Das Gehäuse 1.2 ist aus mechanisch beständigem Material wie aus Reinmetallen, Nickellegierungen, Kobaltlegierungen, Eisenlegierungen, usw. Das Gehäuse 1.2 weist einen rechteckigen Querschnitt auf, mit Breite entlang der Querachse x von vorzugsweise kleiner 5cm, mit einer Länge entlang der Längsachse y von vorzugsweise kleiner 5cm und mit einer Höhe entlang einer Vertikalachse z von vorzugsweise kleiner 2cm, so dass es eine kleine äussere Abmessung von kleiner 50cm³ hat. Das Gehäuse 1.2 ist topfförmig mit einer Gehäuseöffnung 1.20 und einem Gehäuseboden 1.23. Die Gehäuseöffnung 1.20 ist so gross bemessen, dass die Aufnehmereinheit 1.1 durch die Gehäuseöffnung 1.20 in das Gehäuse 1.2 gesetzt und mit dem Gehäuseboden 1.23 befestigt und mit dem Signalausgang 1.4 kontaktiert werden kann. Im Sinne der Erfindung wird der Begriff "Kontaktierung" als eine elektrische und mechanische Verbindung verstanden. Die Gehäuseöffnung 1.20 ist über einen Gehäusedeckel 1.21 verschliessbar. Vorzugsweise erfolgt der Verschluss durch Stoffschluss wie Schweissen, Löten, Kleben, usw. Über das Gehäuse 1.2 wird der Beschleunigungsaufnehmer 1 an einem physischen Gegenstand, dessen Beschleunigung erfasst werden soll, befestigt. Die Art und Weise der Befestigung ist beliebig.

Die Aufnehmereinheit 1.1 weist ein erstes, zweites und drittes Piezoelement 10, 10', 10'', eine erste, zweite und dritte seismische Masse 11, 11', 11" und einen Grundkörper 12 auf. Das erste, zweite und dritte Piezoelement 10, 10', 10'' und die erste, zweite und dritte seismische Masse 11, 11', 11" sind am Grundkörper 12 befestigt. Der Grundkörper 12 wiederum ist am Gehäuse 1.2 befestigt. Vorzugsweise ist der Grundkörper 12 über Stoffschluss wie Kleben, Löten, usw. am Gehäuse 1.2 befestigt.

Das erste, zweite und dritte Piezoelement 10, 10', 10'' besteht aus piezoelektrischem Material wie Quarz (SiO₂ Einkristall), Calcium-Gallo- Germanat (Ca₃Ga₂Ge₄O₁₄ oder CGG), Langasit (La₃Ga₅SiO₁₄ oder LGS), Turmalin, Galliumorthophosphat, Piezokeramik, usw. Das erste, zweite und dritte Piezoelement 10, 10', 10'' weist eine hohe Empfindlichkeit für die aufzunehmende Kraft auf. Das erste, zweite und dritte Piezoelement 10, 10', 10'' ist im Querschnitt rechteckig mit einer Oberfläche von vorzugsweise kleiner 1cm² und mit einer Dicke von vorzugsweise kleiner 2mm. Bei Kenntnis der Erfindung kann der Fachmann anders geformte piezoelektrische Elemente mit anderen Querschnittsformen wie ein Kreis, usw. realisieren.

Vorzugsweise ist die erste, zweite und dritte seismische Masse 11, 11', 11'' aus Material von hoher Dichte wie Iridium, Platin, Wolfram, Gold, usw. Für kleine äussere Abmessungen des Beschleunigungsaufnehmers 1 weist die erste, zweite und dritte seismische Masse 11, 11', 11" eine hohe Dichte von vorzugsweise grösser 19g/cm³ auf. Die erste, zweite und dritte seismische Masse 11, 11', 11'' ist im Querschnitt rechteckig mit einer Oberfläche von vorzugsweise kleiner 1cm² und mit einer Dicke von vorzugsweise kleiner 5mm. Bei Kenntnis der Erfindung kann der Fachmann anders geformte seismische Massen mit anderen Querschnittsformen wie ein Kreis, usw. realisieren. Auch kann der Fachmann seismische Massen aus Material mit geringerer Dichte wie Stahl, Keramik, usw. verwenden.

Der Grundkörper 12 ist aus mechanisch steifem Material von geringer Dichte wie Al₂O₃, Keramik, Al₂O₃-Keramik, Saphir, usw. Der Grundkörper 12 ist mechanisch steif, um eine zu erfassende Beschleunigung inelastisch vom Gehäuse 1.1 auf die erste, zweite und dritte seismische Masse 11, 11', 11" zu übertragen. Für eine hohe mechanische Steifigkeit des Beschleunigungsaufnehmers 1 weist der Grundkörper 12 einen hohen Elastizitätsmodul von vorzugsweise 350GPa bis 470GPa auf. Für ein geringes Gewicht des Beschleunigungsaufnehmers 1 weist der Grundkörper 12 eine geringe Dichte von vorzugsweise kleiner 4g/cm³ auf. Der Grundkörper 12 ist vorzugsweise ein Kubus mit sechs Seitenflächen 12.1, 12.2, 12.3, 12.4, 12.6, 12.7. Vier tangentiale Seitenflächen 12.1, 12.2, 12.3, 12.4 sind tangential zur Vertikalachse z angeordnet. Zwei normale Seitenflächen 12.6, 12.7 sind normal zur Vertikalachse z angeordnet. Die Seitenflächen 12.1, 12.2, 12.3, 12.4, 12.6, 12.7 sind weitgehend gleich gross. Jede Seitenfläche 12.1, 12.2, 12.3, 12.4, 12.6, 12.7 weist eine Oberfläche von kleiner 1cm² auf. Im Sinne der Erfindung hat das Eigenschaftswort "weitgehend" die Bedeutung von "+/-10%". Jede der Achsen x, y, z steht normal zu zwei der Seitenflächen. Bei Kenntnis der Erfindung kann der Fachmann einen anders geformten Grundkörper mit anderen Oberflächenformen wie ein Kreis, usw. realisieren.

Eine erste seismische Masse 11 und ein erstes Piezoelement 10 sind an einer ersten tangentialen Seitenfläche 12.1 des Grundkörpers 12 befestigt. Eine zweite seismische Masse 11' und ein zweites Piezoelement 10' sind an einer zweiten tangentialen Seitenfläche 12.2 des Grundkörpers 12 befestigt. Eine dritte seismische Masse 11" und ein drittes Piezoelement 10" sind an einer dritten tangentialen Seitenfläche 12.3 des Grundkörpers 12 befestigt. Dabei ist ein Piezoelement 10, 10', 10" jeweils zwischen einer tangentialen Seitenfläche 12.1, 12.2, 12.3 und einer seismischen Masse 11, 11', 11'' angeordnet. Eine vierte tangentiale Seitenfläche 12.4 ist frei.

Die Befestigung der ersten, zweiten und dritten seismischen Masse 11, 11', 11" und des ersten, zweiten und dritten Piezoelements 10, 10', 10'' am Grundkörper 12 erfolgt über ein erstes, zweites und drittes inneres Verbindungsmittel 15, 15', 15" und ein erstes, zweites und drittes äusseres Verbindungsmittel 16, 16', 16''. Die Befestigung erfolgt über Stoffschluss wie Kleben, Thermokompressionsbonden, usw. Eine solche mechanische Befestigung der ersten, zweiten und dritten seismischen Masse 11, 11', 11" und des ersten, zweiten und dritten Piezoelements 10, 10', 10'' durch erste, zweite und dritte innere und erste, zweite und dritte äussere Verbindungsmittel 15, 15', 15", 16, 16', 16" erleichtert die Montage des Beschleunigungsaufnehmers 1 und ist rasch und kostengünstig durchführbar.

Das erste, zweite und dritte innere und das erste, zweite und dritte äussere Verbindungsmittel 15, 15', 15", 16, 16', 16'' ist ein chemisch härtender Klebstoff oder ein physikalisch abbindbarer Klebstoff oder eine Kombination aus einem chemisch härtenden Klebstoff und einem physikalisch abbindbaren Klebstoff. Vorzugsweise besteht das erste, zweite und dritte innere und das erste, zweite und dritte äussere Verbindungsmittel 15, 15', 15", 16, 16', 16'' aus Klebstoff wie Epoxid, Polyurethan, Cyanacrylat, Methylmethacrylat, usw. Das erste, zweite und dritte innere und das erste, zweite und dritte äussere Verbindungsmittel 15, 15', 15'', 16, 16', 16'' ist ein elektrischer Isolator mit einem spezifischen elektrischen Widerstand von grösser 10¹²Ωmm²/m.

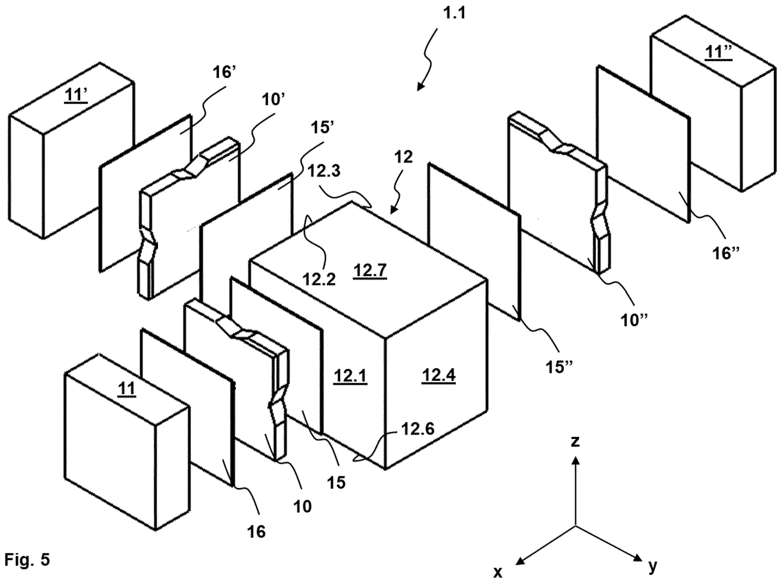

Wie in Fig. 5 dargestellt, ist das erste Piezoelement 10 über ein erstes inneres Verbindungsmittel 15 an der ersten tangentialen Seitenfläche 12.1 befestigt. Die erste seismische Masse 11 ist über ein erstes äusseres Verbindungsmittel 16 am ersten Piezoelement 10 befestigt. Das zweite Piezoelement 10' ist über ein zweites inneres Verbindungsmittel 15' an der zweiten tangentialen Seitenfläche 12.2 befestigt. Die zweite seismische Masse 11' ist über ein zweites äusseres Verbindungsmittel 16' am zweiten Piezoelement 10' befestigt. Das dritte Piezoelement 10" ist über ein drittes inneres Verbindungsmittel 15'' an der dritten tangentialen Seitenfläche 12.3 befestigt. Die dritte seismische Masse 11" ist über ein drittes äusseres Verbindungsmittel 16'' am dritten Piezoelement 10" befestigt.

Vorzugsweise ist das erste, zweite und dritte Piezoelement 10, 10', 10" durch das erste, zweite und dritte innere und das erste, zweite und dritte äussere Verbindungsmittel 15, 15', 15", 16, 16', 16" scherkraftfest mit der ersten, zweiten und dritten seismischen Masse 11, 11', 11" und dem Grundkörper 12 befestigt.

Jedes erste, zweite und dritte innere und jedes erste, zweite und dritte äussere Verbindungsmittel 15, 15', 15'', 16, 16', 16'' ist im Querschnitt rechteckig mit einer Oberfläche von vorzugsweise kleiner 1cm² und mit einer Dicke von vorzugsweise kleiner 0.1mm. Bei Kenntnis der Erfindung kann der Fachmann anders geformte innere und äussere Verbindungsmittel mit anderen Querschnittsformen wie ein Kreis, usw. realisieren.

Das erste, zweite und dritte Piezoelement 10, 10', 10" weist eine hohe Empfindlichkeit für den transversalen Schubeffekt entlang einer Haupttangentialachse h und eine geringe Empfindlichkeit für den transversalen Schubeffekt entlang einer Nebentangentialachse n und eine geringe Empfindlichkeit für den piezoelektrischen Transversaleffekt entlang einer Normalachse a auf. Für jedes der drei Piezoelemente 10, 10', 10" ist die Haupttangentialachse h eine Andere der drei Achsen x, y, z. Für jedes der drei Piezoelemente 10, 10', 10" ist die Nebentangentialachse n eine Andere der drei Achsen x, y, z. Für jedes der drei Piezoelemente 10, 10', 10" ist die Normalachse a eine Andere der drei Achsen x, y, z.

Beim transversalen Schubeffekt entlang der Haupttangentialachse h oder der Nebentangentialachse n werden piezoelektrische Ladungen auf den gleichen Stirnflächen des ersten, zweiten und dritten Piezoelements 10, 10', 10'' erzeugt, auf die eine Scherkraft entlang der Hauttangentialachse h oder Nebentangentialachse n wirkt.

Beim piezoelektrischen Transversaleffet werden piezoelektrische Ladungen auf Mantelflächen des ersten, zweiten und dritten Piezoelements 10, 10', 10'' erzeugt, welche Mantelflächen senkrecht zu den Stirnflächen des ersten, zweiten und dritten Piezoelements 10, 10', 10" stehen, auf die eine Normalkraft entlang einer Normalachse a wirkt.

Je höher die Empfindlichkeit ist, desto mehr piezoelektrische Ladungen werden für eine gegebene Grösse der Kraft erzeugt. Im Sinne der Erfindung stehen die Ausdrücke "hohe Empfindlichkeit" und "geringe Empfindlichkeit" in einem Verhältnis zueinander. Jedes der drei Piezoelemente 10, 10', 10" erzeugt mit einer hohen Empfindlichkeit für eine Scherkraft entlang einer Haupttangentialachse h um mindestens einen Faktor 5 mehr piezoelektrische Ladungen pro Krafteinheit als mit einer geringen Empfindlichkeit für eine Scherkraft entlang einer Nebentangentialachse n oder für eine Normalkraft entlang einer Normalachse a.

Das piezoelektrische Material ist also so gewählt, dass hauptsächlich piezoelektrische Ladungen vom transversalen Schubeffekt entlang der Hauttangentialachse h für die Erfassung der Beschleunigung berücksichtigt. Im Folgenden werden piezoelektrische Ladungen gemäss dem transversalen Schubeffekt entlang der Nebentangentialachse n und gemäss dem piezoelektrischen Transversaleffekt entlang der Normalachse a als piezoelektrische Störladungen bezeichnet.

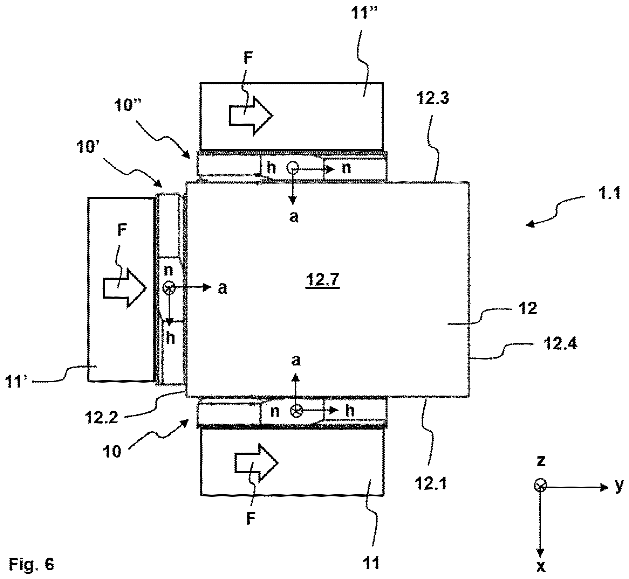

Fig. 6 ist eine Draufsicht der Aufnehmereinheit 1.1 unter der Wirkung einer Beschleunigung. Durch die Beschleunigung üben die erste, zweite und dritte seismische Masse 11, 11', 11'' eine Kraft F auf Stirnflächen des ersten, zweiten und dritten Piezoelements 10, 10', 10" aus. Die Kraft F wirkt beispielhaft parallel entlang der Längsachse y, was durch Pfeile dargestellt ist.

Das erste Piezoelement 10 weist eine hohe Empfindlichkeit für eine Scherkraft entlang der Längsachse y als Haupttangentialachse h auf. Da die Kraft F entlang der Längsachse y wirkt, erzeugt das erste Piezoelement 10 für sie gemäss dem transversalen Schubeffekt auf den Stirnflächen piezoelektrische Ladungen. Das erste Piezoelement 10 weist eine geringe Empfindlichkeit für eine Scherkraft entlang der Vertikalachse z als Nebentangentialachse n auf und es weist eine geringe Empfindlichkeit für eine Normalkraft entlang der Querachse x als Normalachse a auf. Die Kraft F wirkt entlang der Längsachse y und da übt entlang der Vertikalachse z ein Drehmoment aus. Das erste Piezoelement 10 erzeugt für das Drehmoment gemäss dem transversalen Schubeffekt auf den Stirnflächen piezoelektrische Störladungen.

Das zweite Piezoelement 10' weist eine hohe Empfindlichkeit für eine Scherkraft entlang der Querachse x als Haupttangentialachse h auf. Da die Kraft F jedoch entlang der Längsachse y wirkt, erzeugt das zweite Piezoelement 10' für sie auf den Stirnflächen keine piezoelektrischen Ladungen. Das zweite Piezoelement 10' weist eine geringe Empfindlichkeit für eine Scherkraft entlang der Vertikalachse z als Nebentangentialachse n auf und es weist eine geringe Empfindlichkeit für eine Normalkraft entlang der Längsachse y als Normalachse a auf. Da die Kraft F entlang der Längsachse y wirkt, erzeugt das zweite Piezoelement 10' für sie gemäss dem piezoelektrischen Transversaleffekt auf den Mantelflächen piezoelektrische Störladungen.

Und das dritte Piezoelement 10" weist eine hohe Empfindlichkeit für eine Scherkraft entlang der Vertikalachse z als Haupttangentialachse h auf. Da die Kraft F jedoch als Scherkraft entlang der Längsachse y wirkt, erzeugt das dritte Piezoelement 10" für sie auf den Stirnflächen keine piezoelektrischen Ladungen. Das dritte Piezoelement 10" weist eine geringe Empfindlichkeit für eine Scherkraft entlang der Längsachse n als Nebentangentialachse n auf und es weist eine geringe Empfindlichkeit für eine Normalkraft entlang der Querachse x als Normalachse a auf. Die Kraft F wirkt entlang der Längsachse y und übt entlang der Vertikalachse z ein Drehmoment aus. Das dritte Piezoelement 10'' erzeugt für das Drehmoment gemäss dem transversalen Schubeffekt auf den Stirnflächen piezoelektrische Störladungen.

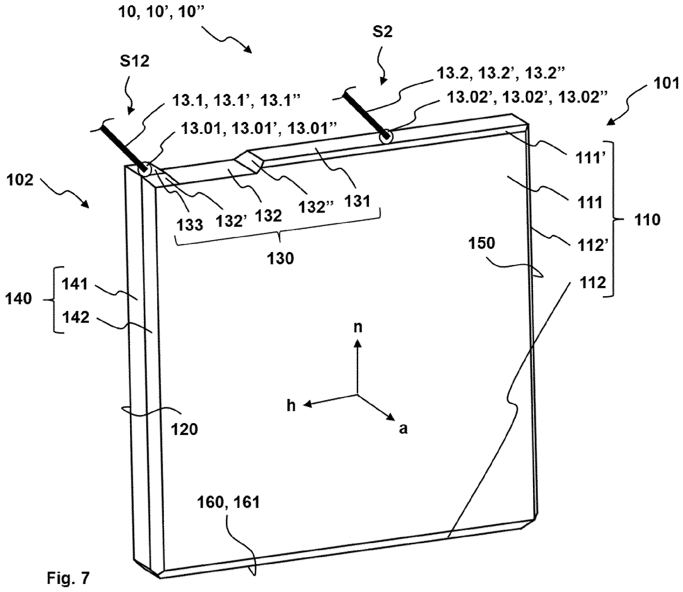

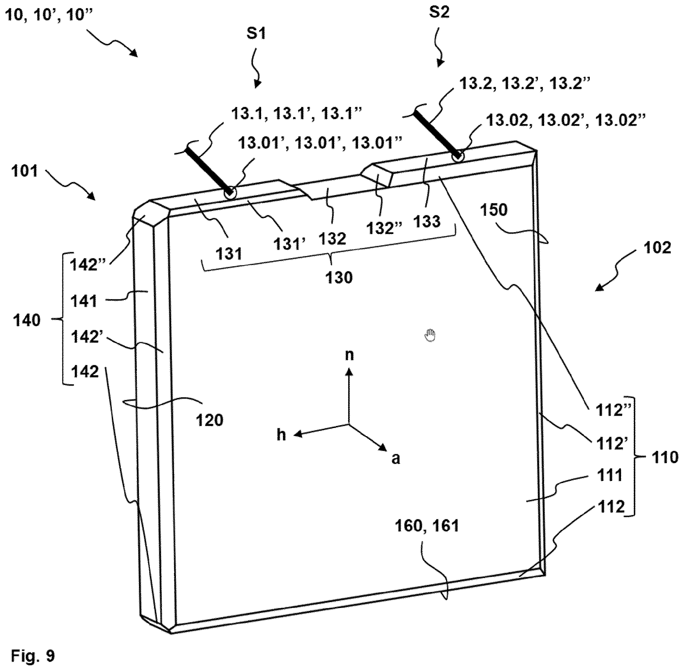

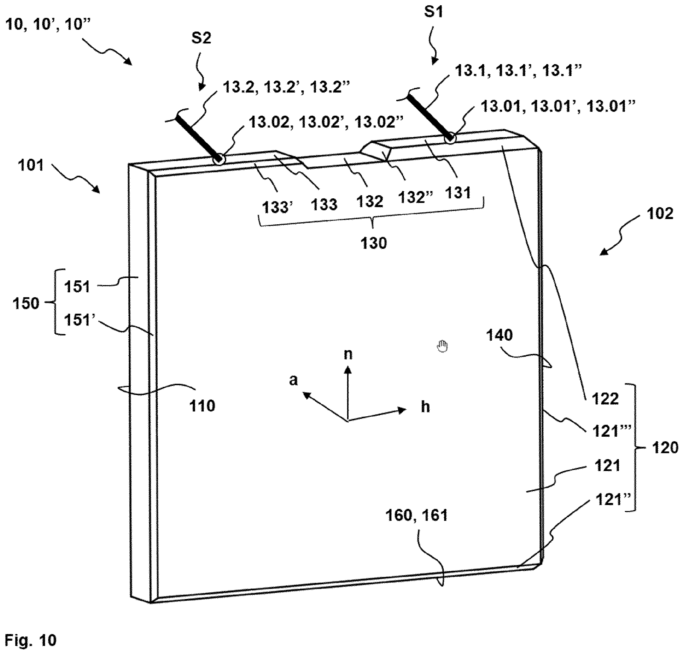

Fig. 7 und 8 zeigen eine erste Ausführungsform eines ersten, zweiten oder dritten Piezoelements 10, 10', 10" der Aufnehmereinheit 1.1 im Detail. Fig. 9 und 10 zeigen eine zweite Ausführungsform eines ersten, zweiten oder dritten Piezoelements 10, 10', 10" der Aufnehmereinheit 1.1 im Detail. Das erste, zweite oder dritte Piezoelement 10, 10', 10" weist zwei Stirnflächen 110, 120 und vier Mantelflächen 130, 140, 150, 160 auf.

Jedes der drei Piezoelemente 10, 10', 10" weist eine erste Stirnfläche 110 und eine zweite Stirnfläche 120 auf. Wobei jede Stirnfläche 110, 120 in einer von der Haupttangentialachse h und der Nebentangentialachse n aufgespannten Ebene liegt. In der Ebene steht die Nebentangentialachse n senkrecht auf der Haupttangentialachse h. Und die Normalachse a steht normal zur Ebene. Unter der Wirkung einer Scherkraft entlang der Haupttangentialachse h erzeugt jedes der drei Piezoelemente 10, 10', 10'' piezoelektrische Ladungen auf den zwei Stirnflächen 110, 120. Und unter der Wirkung einer Scherkraft entlang der Nebentangentialachse n erzeugt jedes der drei Piezoelemente 10, 10', 10" piezoelektrische Störladungen auf den zwei Stirnflächen 110, 120. Jedes der drei Piezoelemente 10, 10', 10'' weist Mantelflächen 130, 140, 150, 160 auf. Die Mantelflächen 130, 140, 150, 160 liegen parallel zur Normalachse a. Die Mantelflächen 130, 140, 150, 160 weisen eine erste Mantelfläche 130, eine zweite Mantelfläche 140, eine dritte Mantelfläche 150 und eine vierte Mantelfläche 160 auf. Die erste Mantelfläche 130 und die vierte Mantelfläche 160 liegen normal zur Nebentangentialachse n des Piezoelementes 10, 10', 10''. Die zweite Mantelfläche 140 und die dritte Mantelfläche 150 liegen normal zur Haupttangentialachse h des Piezoelementes 10, 10', 10".

Unter der Wirkung einer Normalkraft entlang der Normalachse a erzeugt jedes der drei Piezoelemente 10, 10', 10" piezoelektrische Störladungen auf den vier Mantelflächen 130, 140, 150, 160.

Die piezoelektrischen Ladungen für die zu erfassende Scherkraft werden also nur auf zwei Stirnflächen 110, 120 der Piezoelemente erzeugt. Und piezoelektrische Störladungen werden sowohl auf den zwei Stirnflächen 110, 120 als auch auf den vier Mantelflächen 130, 140, 150, 160 erzeugt.

Die Stirnflächen 110, 120 weisen bereichsweise mindestens eine elektrisch leitende Stirnbeschichtung 111, 121 auf. Eine Grösse des Bereichs der elektrisch leitenden Stirnbeschichtung 111, 121 kann zwischen 90% und 100% der Stirnflächen 110, 120 betragen. Die Mantelflächen 130, 140, 150, 160 weisen bereichsweise mindestens eine elektrisch leitende Mantelbeschichtung 131, 141, 151, 161 auf. Eine Grösse des Bereichs der elektrisch leitenden Mantelbeschichtung 131, 141, 151, 161 kann zwischen 0% und 100% der Mantelflächen 130, 140, 150, 160 betragen. Die elektrisch leitende Stirnbeschichtung 111, 121 und die elektrisch leitende Mantelbeschichtung 131, 141, 151, 161 können durch Thermokaschieren mit einer Metallfolie oder durch Abscheiden von Metall gebildet werden. Als Metall lassen sich Kupfer, Kupferlegierungen, Gold, Goldlegierungen, Aluminium, Aluminiumlegierungen, Silber, Silberlegierungen, usw. verwenden. Die elektrisch leitende Stirnbeschichtung 111, 121 und die elektrisch leitende Mantelbeschichtung 131, 141, 151, 161 weisen eine Dicke von vorzugsweise kleiner 0.1mm auf.

Der Beschleunigungsaufnehmer 1 weist also keine gegenständlichen Elektroden mehr auf, sondern lediglich eine elektrisch leitende Stirnbeschichtung 111, 121 und eine elektrisch leitende Mantelbeschichtung 131, 141, 151, 161. Somit sind weniger Bestandteile vorhanden, was Platz spart und die Montage des Beschleunigungsaufnehmers 1 vereinfacht.

Durch die elektrisch leitende Stirnbeschichtung 111, 121 und die elektrisch leitende Mantelbeschichtung 131, 141, 151, 161 ist eine mechanische Vorspannung des ersten, zweiten oder dritten Piezoelements 10, 10', 10" nicht nötig. Denn die elektrisch leitende Stirnbeschichtung 111, 121 und die elektrisch leitende Mantelbeschichtung 131, 141, 151, 161 liegen stoffschlüssig auf den Stirnflächen 110, 120 und den Mantelflächen 130, 140, 150, 160 auf und schliesst mikroskopisch kleine Poren in den Stirnflächen 110, 120 und den Mantelflächen 130, 140, 150, 160. Durch den Verschluss der mikroskopisch kleinen Poren benötigt der Beschleunigungsaufnehmer 1 keine eigenständigen Vorspannmittel wie eine Vorspannhülse gemäss CH399021A1 oder ein Vorspanngehäuse gemäss RU1792537C1 mehr. Somit sind weniger Bestandteile vorhanden, was Platz und Gewicht spart und die Montage des Beschleunigungsaufnehmers 1 vereinfacht.

Gemäss der ersten Ausführungsform eines ersten, zweiten oder dritten Piezoelements 10, 10', 10" nach Fig. 7 und 8 weist die erste Stirnfläche 110 bereichsweise zwei erste elektrisch leitende Stirnbeschichtungen 111, 111' und bereichsweise zwei erste unbeschichtete Stirnbereiche 112, 112' auf. Und die zweite Stirnfläche 120 weist bereichsweise zwei mehrere elektrisch leitende Stirnbeschichtungen 121, 121', 121'' auf. Die erste Mantelfläche 130 weist bereichsweise eine erste elektrisch leitende Mantelbeschichtung 131, bereichsweise eine weitere erste elektrisch leitende Mantelbeschichtung 133 und bereichsweise mehrere unbeschichtete erste Mantelbereiche 132, 132', 132'', 132‴, 132"" auf. Die zweite Mantelfläche 140 weist bereichsweise eine zweite elektrisch leitende Mantelbeschichtung 141 und bereichsweise einen zweiten unbeschichteten Mantelbereich 142 auf. Die dritte Mantelfläche 150 weist bereichsweise eine dritte elektrisch leitende Mantelbeschichtung 151 auf und bereichsweise zwei dritte unbeschichtete Mantelbereiche 152, 152' auf. Die vierte Mantelfläche 160 weist bereichsweise eine vierte elektrisch leitende Mantelbeschichtung 161 auf.

Gemäss der ersten Ausführungsform eines ersten, zweiten oder dritten Piezoelements 10, 10', 10" nach Fig. 7 und 8 bilden die zwei ersten elektrisch leitenden Stirnbeschichtungen 111, 111', die weitere erste elektrisch leitende Mantelbeschichtung 133 und die dritte elektrisch leitende Mantelbeschichtung 151 eine erste zusammenhängende elektrische Leitbeschichtung 101. Die mehreren zweiten elektrisch leitenden Stirnbeschichtungen 121, 121', 121'' die erste elektrisch leitende Mantelbeschichtung 131, die zweite elektrisch leitende Mantelbeschichtung 141 und die vierte elektrisch leitende Mantelbeschichtung 161 bilden eine zweite zusammenhängende elektrische Leitbeschichtung 102.

Im Sinne der Erfindung hat das Eigenschaftswort "zusammenhängend" die Bedeutung von "elektrisch leitend miteinander verbunden". Die erste zusammenhängende elektrische Leitbeschichtung 101 greift erste piezoelektrische Ladungen als erste Beschleunigungssignale S1 ab, welche auf Oberflächen des ersten, zweiten oder dritten Piezoelements 10, 10', 10" unterhalb der ersten zusammenhängenden elektrischen Leitbeschichtung 101 erzeugt werden. Die zweite zusammenhängende elektrische Leitbeschichtung 102 greift zweite piezoelektrische Ladungen als zweite Beschleunigungssignale S2 ab, welche auf Oberflächen des ersten, zweiten oder dritten Piezoelements 10, 10', 10'' unterhalb der zweiten zusammenhängenden elektrischen Leitbeschichtung 102 erzeugt werden. Die ersten und zweiten piezoelektrischen Ladungen haben unterschiedliches Vorzeichen. Entweder haben die ersten piezoelektrischen Ladungen ein negatives Vorzeichen, dann haben die zweiten piezoelektrischen Ladungen ein positives Vorzeichen, oder die ersten piezoelektrischen Ladungen haben ein positives Vorzeichen, dann haben die zweiten piezoelektrischen Ladungen ein negatives Vorzeichen.

Vorzugsweise bilden die erste elektrisch leitende Stirnbeschichtung 111 und die erste elektrisch leitende Mantelbeschichtung 131 die erste zusammenhängende elektrische Leitbeschichtung 101. Vorzugsweise bilden die zweite elektrisch leitende Stirnbeschichtung 121 und die weitere erste elektrisch leitende Mantelbeschichtung 133 die zweite zusammenhängende elektrische Leitbeschichtung 102. Vorzugsweise ist mindestens eine zweite, dritte oder vierte elektrisch leitende Mantelbeschichtung 141, 151, 161 Teil der ersten zusammenhängenden elektrischen Leitbeschichtung 101 oder Teil der zweiten zusammenhängenden elektrischen Leitbeschichtung 102.

Gemäss der ersten Ausführungsform eines ersten, zweiten oder dritten Piezoelements 10, 10', 10" nach Fig. 7 und 8 sind die erste zusammenhängende elektrische Leitbeschichtung 101 und die zweite zusammenhängende elektrische Leitbeschichtung 102 durch zwei erste unbeschichtete Stirnbereiche 112, 112', mehrere erste unbeschichtete Mantelbereiche 132, 132', 132", 132‴, 132‴, einen zweiten unbeschichteten Mantelbereich 142 und zwei dritte unbeschichtete Mantelbereiche 152, 152' elektrisch voneinander isoliert.

Gemäss der zweiten Ausführungsform eines ersten, zweiten oder dritten Piezoelements 10, 10', 10" nach Fig. 9 und 10 weist die erste Stirnfläche 110 bereichsweise eine erste elektrisch leitende Stirnbeschichtung 111 und bereichsweise mehrere erste unbeschichtete Stirnbereiche 112, 112', 112" auf. Und die zweite Stirnfläche 120 weist bereichsweise mehrere zweite elektrisch leitende Stirnbeschichtungen 121, 121'', 121‴ und bereichsweise einen zweiten unbeschichteten Stirnbereich 122 auf. Die erste Mantelfläche 130 weist bereichsweise eine erste elektrische leitende Mantelbeschichtung 131, bereichsweise zwei weitere erste elektrisch leitende Mantelbeschichtungen 133, 133' und bereichsweise mehrere unbeschichtete erste Mantelbereiche 132, 132', 132" auf. Die zweite Mantelfläche 140 weist bereichsweise eine zweite elektrisch leitende Mantelbeschichtung 141 und bereichsweise mehrere zweite unbeschichtete Mantelbereiche 142, 142', 142'' auf. Die dritte Mantelfläche 150 weist bereichsweise eine dritte elektrisch leitende Mantelbeschichtung 151 auf und bereichsweise einen dritten unbeschichteten Mantelbereich 152, 152' auf. Die vierte Mantelfläche 160 weist bereichsweise eine vierte elektrisch leitende Mantelbeschichtung 161 auf.

Gemäss der zweiten Ausführungsform eines ersten, zweiten oder dritten Piezoelements 10, 10', 10" nach Fig. 9 und 10 bilden die mehreren ersten elektrisch leitenden Stirnbeschichtungen 112, 112', 112" und die zwei ersten elektrisch leitenden Mantelbeschichtungen 131, 131' eine erste zusammenhängende elektrische Leitbeschichtung 101. Die mehreren zweiten elektrisch leitenden Stirnbeschichtungen 121, 121', 121'', die zwei weiteren ersten elektrisch leitenden Mantelbeschichtungen 133, 133', die zweite elektrisch leitende Mantelbeschichtung 141, die dritte elektrisch leitende Mantelbeschichtung 151 und die vierte elektrisch leitende Mantelbeschichtung 161 bilden eine zweite zusammenhängende elektrische Leitbeschichtung 102.

Gemäss der zweiten Ausführungsform eines ersten, zweiten oder dritten Piezoelements 10, 10', 10" nach Fig. 9 und 10 greifen die elektrisch leitenden Mantelbeschichtungen 131, 131' der ersten zusammenhängenden elektrischen Leitbeschichtung 101 für die Normalkraft entlang der Normalachse a piezoelektrische Störladungen ab, welche piezoelektrischen Störladungen entgegengesetzte Polarität haben, wie die von der ersten elektrisch leitenden Stirnbeschichtung 111 der ersten zusammenhängenden elektrischen Leitbeschichtung 101 für die Scherkraft entlang der Nebentangentialachse n abgegriffenen piezoelektrischen Störladungen. Und die elektrisch leitenden Mantelbeschichtungen 133, 141, 151, 161 der zweiten zusammenhängenden elektrischen Leitbeschichtung 102 greifen für die Normalkraft entlang der Normalachse a piezoelektrische Störladungen ab, welche piezoelektrischen Störladungen entgegengesetzte Polarität haben, wie die von der zweiten elektrisch leitenden Stirnbeschichtung 121, 121", 121‴ der zweiten zusammenhängenden elektrischen Leitbeschichtung 102 für die Scherkraft entlang der Nebentangentialachse n abgegriffenen piezoelektrischen Störladungen.

Gemäss der zweiten Ausführungsform eines ersten, zweiten oder dritten Piezoelements 10, 10', 10" nach Fig. 9 und 10 sind die erste elektrische Leitbeschichtung 101 und die zweite elektrische Leitbeschichtung 102 durch mehrere erste unbeschichtete Stirnbereiche 112, 112', 112'', einen zweiten unbeschichteten Stirnbereich 122, mehrere erste unbeschichtete Mantelbereiche 132, 132', 132'', mehrere zweite unbeschichtete Mantelbereiche 142, 142', 142" und einen dritten unbeschichteten Mantelbereich 152 elektrisch voneinander isoliert.

Ein Verhältnis der Grösse der ersten elektrisch leitenden Beschichtung 131 zur Grösse der weiteren ersten elektrisch leitenden Beschichtung 133 lässt sich durch eine relative Lage und/oder Grösse der ersten unbeschichteten Mantelbereiche 132, 132', 132'', 132‴, 132"" der ersten Mantelfläche 130 einstellen. Im Sinne der Erfindung hat das Konjunktionspaar "und/oder" die Bedeutung dass entweder nur einer der Konjunktionen eintritt oder dass beide Konjunktionen eintreten.

Ein Verhältnis der Grösse der ersten elektrisch leitenden Beschichtung 131 zur Grösse der weiteren ersten elektrisch leitenden Beschichtung 133 lässt sich durch eine relative Lage der ersten unbeschichteten Mantelbereiche 132, 132', 132", 132‴, 132"" der ersten Mantelfläche 130 bezüglich der zweiten und dritten Mantelfläche 140, 150 einstellen. Je nach relativer Lage der ersten unbeschichteten Mantelbereiche 132, 132', 132'', 132‴, 132""der ersten Mantelfläche 130 mehr in Richtung zur zweiten Mantelfläche 140 oder mehr in Richtung zur dritten Mantelfläche 150 lässt sich das Verhältnis der Grösse der ersten elektrisch leitenden Beschichtung 131 zur Grösse der weiteren ersten elektrisch leitenden Beschichtung 133 entsprechend verkleinern oder vergrössern. Gemäss der ersten Ausführungsform eines ersten, zweiten oder dritten Piezoelements 10, 10', 10" nach Fig. 7 und 8 liegen die ersten unbeschichtete Mantelbereiche 132, 132', 132", 132‴, 132"" relativ nahe zur zweiten Mantelfläche 140. Gemäss der zweiten Ausführungsform eines ersten, zweiten oder dritten Piezoelements 10, 10', 10" nach Fig. 9 und 10 liegen die ersten unbeschichtete Mantelbereiche 132, 132', 132" relativ gleich weit entfernt zur zweiten und dritten Mantelfläche 140, 150.

Ein Verhältnis der Grösse der ersten elektrisch leitenden Beschichtung 131 zur Grösse der weiteren ersten elektrisch leitenden Beschichtung 133 lässt sich aber auch durch Vergrösserung oder Verkleinerung der Grösse der ersten unbeschichteten Mantelbereiche 132, 132', 132", 132‴, 132""der ersten Mantelfläche 130 einstellen. Gemäss der ersten Ausführungsform eines ersten, zweiten oder dritten Piezoelements 10, 10', 10" nach Fig. 7 und 8 sind die ersten unbeschichteten Mantelbereiche 132, 132', 132", 132‴, 132"" weitgehend doppelt so gross wie die weitere erste elektrisch leitende Beschichtung 133 und die ersten unbeschichteten Mantelbereiche 132, 132', 132'', 132‴, 132"" sind weitgehend fünfmal kleiner als die erste elektrisch leitende Beschichtung 131. Gemäss der zweiten Ausführungsform eines ersten, zweiten oder dritten Piezoelements 10, 10', 10" nach Fig. 9 und 10 sind die ersten unbeschichtete Mantelbereiche 132, 132', 132'' weitgehend gleich gross wie die erste elektrisch leitende Beschichtung 131, 131' und wie die weitere erste elektrisch leitende Beschichtung 133.

Vorzugsweise greifen die elektrisch leitenden Mantelbeschichtungen der ersten elektrischen Leitbeschichtung 101 für die Normalkraft entlang der Normalachse a piezoelektrische Störladungen ab, welche piezoelektrischen Störladungen entgegengesetzte Polarität haben, wie die von der ersten elektrisch leitenden Stirnbeschichtung der ersten elektrischen Leitbeschichtung 101 für die Scherkraft entlang der Nebentangentialachse n abgegriffenen piezoelektrischen Störladungen. Und die elektrisch leitenden Mantelbeschichtungen der zweiten elektrischen Leitbeschichtung 102 greifen für die Normalkraft entlang der Normalachse a piezoelektrische Störladungen ab, welche piezoelektrischen Störladungen entgegengesetzte Polarität haben, wie die von der zweiten elektrisch leitenden Stirnbeschichtung der zweiten elektrischen Leitbeschichtung 102 für die Scherkraft entlang der Nebentangentialachse n abgegriffenen piezoelektrischen Störladungen.

Vorzugsweise ist eine Grösse der elektrisch leitenden Mantelbeschichtungen der ersten zusammenhängenden elektrischen Leitbeschichtung 101 so eingestellt, dass die elektrisch leitenden Mantelbeschichtungen für die Normalkraft entlang der Normalachse a weitgehend gleich viele piezoelektrische Störladungen abgreifen, wie die erste elektrisch leitende Stirnbeschichtung der ersten zusammenhängenden elektrischen Leitbeschichtung 101 für die Scherkraft entlang der Nebentangentialachse n abgreift. Und die elektrisch leitenden Mantelbeschichtungen der zweiten zusammenhängenden elektrischen Leitbeschichtung 102 greifen für die Normalkraft entlang der Normalachse a weitgehend gleich viele piezoelektrische Störladungen ab, wie die zweite elektrisch leitende Stirnbeschichtung der zweiten zusammenhängenden elektrischen Leitbeschichtung 102 für die Scherkraft entlang der Nebentangentialachse n abgreift.

Im Unterschied zur Schrift RU1792537C1 wird die Scherkraft erfindungsgemäss nur von einem Piezoelement 10, 10', 10" pro Achse erfasst. Es besteht somit keine Möglichkeit, die Erfassung der Scherkraft entlang der Haupttangentialachse h verfälschenden piezoelektrischen Störladungen einer Scherkraft entlang einer Nebentangentialachse n durch eine Reihenschaltung von zwei Piezoelementen pro Achse mit entgegengesetzter Polarität zu neutralisieren. Mit dem vorliegenden Beschleunigungsaufnehmer 1 wird daher eine andere Lösung realisiert. Denn das piezoelektrische Material erzeugt auch für eine Normalkraft entlang einer Normalachse a piezoelektrische Störladungen auf Mantelflächen 130, 140, 150, 160. Auch diese piezoelektrischen Störladungen verfälschen die Erfassung der Scherkraft entlang der Haupttangentialachse h. Daher werden diese piezoelektrischen Störladungen im üblicherweise auch nicht von den Mantelflächen 130, 140, 150, 160 abgegriffen. Es ist nun erkannt worden, dass das Auftreten einer Scherkraft entlang einer Nebentangentialachse n von einer Normalkraft entlang einer Normalachse a begleitet wird. Für die Erste werden piezoelektrische Störladungen auf den Stirnflächen 110, 120 erzeugt, für die Zweite werden piezoelektrische Störladungen auf den Mantelflächen 130, 140, 150, 160 erzeugt. Diese beiden piezoelektrischen Störladungen verfälschen die Erfassung der Scherkraft entlang der Haupttangentialachse h. Doch durch geeignete erste und zweite zusammenhängende elektrische Leitbeschichtungen 101, 102 lassen sich die Stirnflächen 110, 120 und die Mantelflächen 130, 140, 150, 160 elektrisch in Reihe schalten und die Erfassung der Scherkraft entlang der Haupttangentialachse h verfälschenden piezoelektrischen Störladungen neutralisieren.

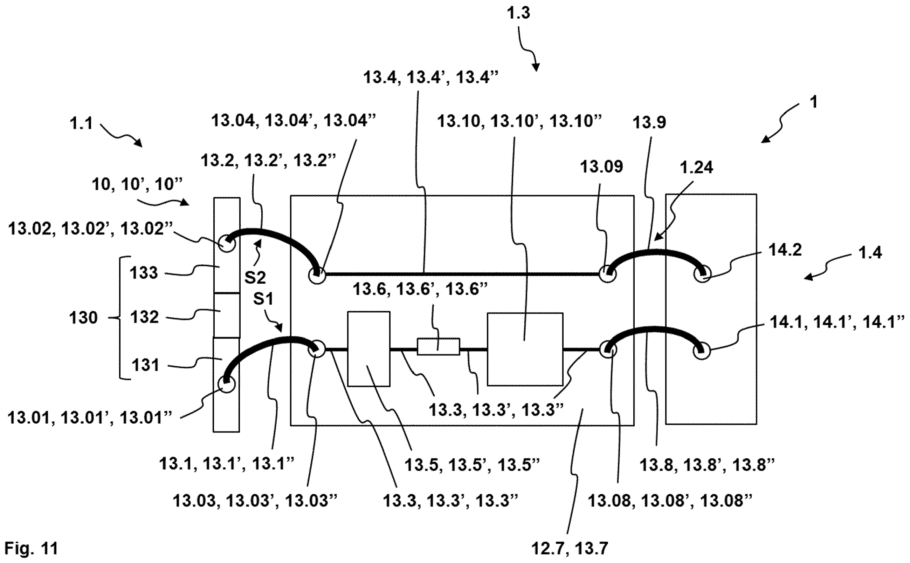

Fig. 11 ist eine schematische Darstellung der Ableitung der piezoelektrischen Ladungen der Aufnehmereinheit 1.1. Zu sehen sind ein Teil eines ersten, zweiten oder dritten Piezoelements 10, 10', 10" mit der ersten Mantelfläche 130 sowie ein Teil der Wandlereinheit 1.3 und ein Teil des Signalausgangs 1.4.

Die Wandlereinheit 1.3 kann erste Beschleunigungssignale S1 wandeln. Die Wandlereinheit 1.3 weist mindestens einen ersten und zweiten Piezoelement-Leiter 13.1, 13.1', 13.1'', 13.2, 13.2', 13.2", mindestens einen ersten und zweiten Grundkörper-Leiter 13.3, 13.3', 13.3'', 13.4, 13.4', 13.4", mindestens einen Transimpedanzwandler 13.10, 13.10', 13.10'', sowie mindestens einen ersten und zweiten Signalausgang-Leiter 13.8, 13.8', 13.8", 13.9 auf. Auch weist die Wandlereinheit 1.3 mindestens einen ersten elektrischen Widerstand 13.5, 13.5', 13.5", und/oder mindestens einen zweiten elektrischen Widerstand 13.6, 13.6', 13.6" auf.

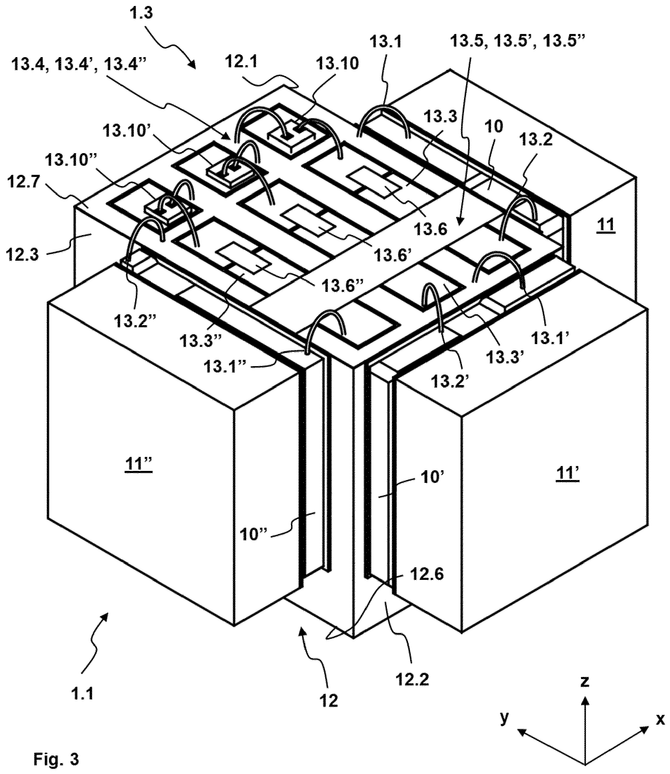

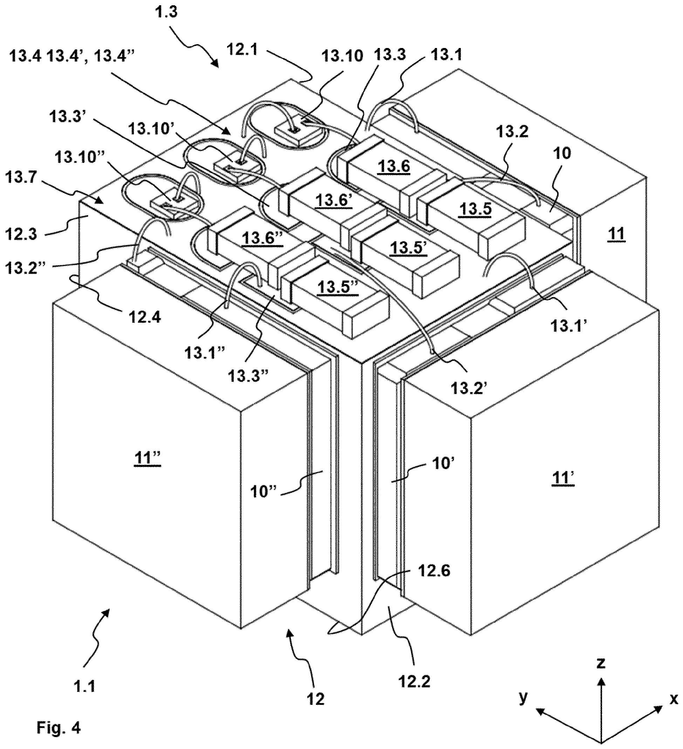

In einer ersten Ausführungsform des Beschleunigungsaufnehmers 1 nach Fig. 1 und 3 ist die Wandlereinheit 1.3 ausschliesslich und direkt auf dem Grundkörper 12 angeordnet. Vorzugsweise ist die Wandlereinheit 1.3 ausschliesslich und direkt auf einer ersten normalen Seitenfläche 12.7 des Grundkörpers 12 angeordnet. In einer zweiten Ausführungsform des Beschleunigungsaufnehmers 1 nach Fig. 2 und 4 ist die Wandlereinheit 1.3 ausschliesslich auf einem Träger 13.7 angeordnet. Der Träger 13.7 ist aus elektrisch isolierendem Material wie Al₂O₃, Keramik, Al₂O₃-Keramik, faserverstärkter Kunststoff, usw. Der Träger 13.7 ist am Grundkörper 12 befestigt. Vorzugsweise ist der Träger 13.7 über Stoffschluss wie Kleben, Löten, usw. auf der ersten normalen Seitenfläche 12.7 des Grundkörpers 12 befestigt.

Der erste und zweite Piezoelement-Leiter 13.1, 13.1', 13.1", 13.2, 13.2', 13.2", der erste und zweite Grundkörper-Leiter 13.3, 13.3', 13.3'', 13.4, 13.4', 13.4", der erste elektrische Widerstand 13.5, 13.5', 13.5", der zweite elektrische Widerstand 13.6, 13.6', 13.6", sowie der Transimpedanzwandler 13.10, 13.10', 13.10"' sind auf einer ersten normalen Seitenfläche 12.7 (erste Ausführungsform des Beschleunigungsaufnehmers 1 nach Fig. 1 und 3) oder auf dem Träger 13.7 (zweite Ausführungsform des Beschleunigungsaufnehmers 1 nach Fig. 2 und 4) befestigt.

Der erste und zweite Piezoelement-Leiter 13.1, 13.1', 13.1", 13.2, 13.2', 13.2", der erste und zweite Grundkörper-Leiter 13.3, 13.3', 13.3'', 13.4, 13.4', 13.4", sowie der erste und zweite Signalausgang-Leiter 13.8, 13.8', 13.8", 13.9 sind aus elektrisch leitfähigem Material wie Kupfer, Kupferlegierungen, Gold, Goldlegierungen, Aluminium, Aluminiumlegierungen, usw. und sie haben einen Durchmesser von 0.02mm bis 0.10mm und sind mechanisch flexibel.

Der erste und zweite Piezoelement-Leiter 13.1, 13.1', 13.1", 13.2, 13.2', 13.2", der erste und zweite Grundkörper-Leiter 13.3, 13.3', 13.3'', 13.4, 13.4', 13.4", sowie erste und zweite Signalausgang-Leiter 13.8, 13.8', 13.8", 13.9 leiten erste und zweite Beschleunigungssignale S1, S2 masseisoliert. Im Sinne der Erfindung bedeutet der Begriff "masseisoliert" elektrisch isoliert gegenüber einer Erdung des Beschleunigungsaufnehmers 1. Vorzugsweise ist das Gehäuse 1.2 des Beschleunigungsaufnehmers 1 geerdet, das Gehäuse 1.2 liegt auf einem elektrischen Potenzial des lokalen Erdreichs. Somit werden Beschleunigungssignale S1, S2 elektrisch isoliert gegenüber einem elektrischen Potential des Beschleunigungsaufnehmers 1 geleitet. Schwankungen im elektrischen Potential des Beschleunigungsaufnehmers 1, beispielsweise zwischen dem Gehäuse 1.2 und der Wandlereinheit 1.3 können so nicht die Erfassung der Beschleunigung verfälschen.

Vorzugsweise sind die ersten und zweiten Grundkörper-Leiter 13.3, 13.3', 13.3", 13.4, 13.4', 13.4" in einer elektrisch leitfähigen Beschichtung strukturiert. Die elektrisch leitfähige Beschichtung erfolgt durch chemische Gasphasenabscheidung, physikalische Gasphasenabscheidung, usw. Die elektrisch leitfähige Beschichtung besteht aus elektrisch leitfähigem Material wie Kupfer, Kupferlegierungen, Gold, Goldlegierungen, Platin, Platinlegierungen, usw. Die elektrisch leitfähige Beschichtung ist eine elektrisch leitfähige Dünnschicht. Der Begriff "Dünnschicht" im Sinne der Erfindung bedeutet, dass die elektrisch leitfähige Beschichtung senkrecht zur flächigen Ausdehnung eine Dicke von vorzugsweise kleiner 0.1mm aufweist. Die elektrisch leitfähige Beschichtung wird direkt auf die erste normale Seitenfläche 12.7 (erste Ausführungsform des Beschleunigungsaufnehmers 1 nach Fig. 1 und 3) oder den Träger 13.7 (zweite Ausführungsform des Beschleunigungsaufnehmers 1 nach Fig. 2 und 4) aufgebracht. Im Sinne der Erfindung hat das Adjektiv "direkt" die Bedeutung von unmittelbar". Vorzugsweise erfolgt die Strukturierung der ersten und zweiten Grundkörper-Leiter 13.3, 13.3', 13.3'', 13.4, 13.4', 13.4" ' in der elektrisch leitfähigen Beschichtung durch Schablonen, Photolithographie und Laserablation.

Vorzugsweise weist die Wandlereinheit 1.3 drei erste und zweite Piezoelement-Leiter 13.1, 13.1', 13.1", 13.2, 13.2', 13.2", auf. Jeweils ein erster elektrischer Piezoelement-Leiter 13.1, 13.1', 13.1" leitet erste Beschleunigungssignale S1 von der ersten elektrischen Leitbeschichtung 101 des ersten, zweiten oder dritten Piezoelements 10, 10', 10'' zur Wandlereinheit 1.3 ab. Jeweils ein zweiter elektrischer Piezoelement-Leiter 13.2, 13.2', 13.2" leitet zweite Beschleunigungssignale S2 von der zweiten elektrischen Leitbeschichtung 102 des ersten, zweiten oder dritten Piezoelements 10, 10', 10'' zur Wandlereinheit 1.3 ab.

Die ersten und zweiten Piezoelement-Leiter 13.1, 13.1', 13.1", 13.2, 13.2', 13.2" kontaktieren die erste Mantelfläche 130. Denn die erste Mantelfläche 130 ist verfügbar und erfüllt eine spezifische technische Funktion, und zwar sind auf ihr Piezoelement-Kontakte 13.01, 13.01', 13.01" angebracht, um die piezoelektrischen Ladungen abzuleiten, was platzsparend ist. Jeweils ein erster Piezoelement-Leiter 13.1, 13.1', 13.1"' kontaktiert über einen ersten Piezoelement-Kontakt 13.01, 13.01', 13.01" die erste elektrische Mantelbeschichtung 131. Jeweils ein zweiter Piezoelement-Leiter 13.2, 13.2', 13.2"' kontaktiert über einen zweiten Piezoelement-Kontakt 13.02, 13.02', 13.02"' die zweite elektrische Mantelbeschichtung 133. Die ersten und zweiten Piezoelement-Kontakte 13.01, 13.01', 13.01", 13.02, 13.02', 13.02" sind auf der ersten Mantelfläche 130 befestigt. Die ersten und zweiten Piezoelement-Kontakte 13.01, 13.01', 13.01", 13.02, 13.02', 13.02" sind ein Stoffschluss wie Drahtbonden, Löten, usw. Beim Drahtbonden eignen sich Verfahren wie Thermokompressionsbonden, Thermosonic-Ball-Wedge-Bonden, Ultraschall-Wedge-Wedge-Bonden usw. Die in Fig. 11 kreisförmigen ersten und zweiten Piezoelement-Kontakte 13.01, 13.01', 13.01", 13.02, 13.02', 13.02" stellen abgeformten Draht dar.

Vorzugsweise weist die Wandlereinheit 1.3 drei erste und zweite Grundkörper-Leiter 13.3, 13.3', 13.3", 13.4, 13.4', 13.4" auf. Jeweils ein erster Piezoelement-Leiter 13.1, 13.1', 13.1" kontaktiert über einen ersten Grundkörper-Zugangskontakt 13.03, 13.03', 13.03" einen ersten Grundkörper-Leiter 13.3, 13.3', 13.3". Jeweils ein zweiter Piezoelement-Leiter 13.2, 13.2', 13.2" kontaktiert über einen zweiten Grundkörper-Zugangskontakt 13.04, 13.04', 13.04" einen zweiten Grundkörper-Leiter 13.4, 13.4', 13.4". Die ersten und zweiten Grundkörper-Zugangskontakte 13.03, 13.03', 13.03", 13.04, 13.04', 13.04" sind auf der ersten normalen Seitenfläche 12.7 (erste Ausführungsform des Beschleunigungsaufnehmers 1 nach Fig. 1 und 3) oder auf dem Träger 13.7 (zweite Ausführungsform des Beschleunigungsaufnehmers 1 nach Fig. 2 und 4) befestigt. Die ersten und zweiten Grundkörper-Zugangskontakte 13.03, 13.03', 13.03", 13.04, 13.04', 13.04" sind ein Stoffschluss wie Drahtbonden, Löten, usw. Beim Drahtbonden eignen sich Verfahren wie Thermokompressionsbonden, Thermosonic-Ball-Wedge-Bonden, Ultraschall-Wedge-Wedge-Bonden usw. Die in Fig. 11 kreisförmigen ersten und zweiten Grundkörper-Zugangskontakte 13.03, 13.03', 13.03", 13.04, 13.04', 13.04" stellen abgeformten Draht dar.

Der erste elektrische Widerstand 13.5, 13.5', 13.5", der zweite elektrische Widerstand 13.6, 13.6', 13.6"' sowie der Transimpedanzwandler 13.10, 13.10', 13.10" stehen über die ersten Grundkörper-Leiter 13.3, 13.3', 13.3" elektrisch miteinander in Verbindung. Die zweiten Grundkörper-Leiter 13.4, 13.4', 13.4" ' mit den zweiten Beschleunigungssignalen S2 des ersten, zweiten und dritten Piezoelements 10, 10', 10'' sind elektrisch kurzgeschaltet und liegen auf einem elektrischen Referenzpotential der Wandlereinheit 1.3. Das elektrische Referenzpotential ist eine stabilisierte, d.h. zeitlich konstant gehaltene elektrische Gleichspannung.

Vorzugsweise weist die Wandlereinheit 1.3 drei Transimpedanzwandler 13.10, 13.10', 13.10" auf. Die drei Transimpedanzwandler 13.10, 13.10', 13.10" sind identisch aufgebaut. In den Ausführungsformen nach Fig. 1 und 2 ist der Transimpedanzwandler 13.10, 13.10', 13.10" ein elektronisches Bauteil. Der Transimpedanzwandler 13.10, 13.10', 13.10" ist stoffschlüssig über einen Intermediär auf der ersten normalen Seitenfläche 12.7 (erste Ausführungsform des Beschleunigungsaufnehmers 1 nach Fig. 1 und 3) oder auf dem Träger 13.7 (zweite Ausführungsform des Beschleunigungsaufnehmers 1 nach Fig. 2 und 4) befestigt und/oder der Transimpedanzwandler 13.10, 13.10', 13.10" ist stoffschlüssig über den Intermediär auf den ersten und zweiten Grundkörper-Leitern 13.3, 13.3', 13.3", 13.4, 13.4', 13.4" befestigt. Der Intermediär ist ein chemisch härtender Klebstoff, ein physikalisch abbindbarer Klebstoff, ein Lot, usw. Vorzugsweise ist der Intermediär ein Klebstoff wie Epoxid, Polyurethan, Cyanacrylat, Methylmethacrylat, usw. Jeweils ein erster Grundkörper-Leiter 13.3, 13.3', 13.3" kontaktiert einen Transimpedanzwandler 13.10, 13.10', 13.10''. Die Art und Weise der Kontaktierung ist beliebig. Jeweils ein erster Grundkörper-Leiter 13.3, 13.3', 13.3" leitet erste Beschleunigungssignale S1 zu einem Eingang eines Transimpedanzwandlers 13.10, 13.10', 13.10" ab. Vorzugsweise hat der Eingang des Transimpedanzwandlers 13.10, 13.10', 13.10' eine hohe Impedanz von grösser 10⁷Ω. Der Transimpedanzwandler 13.10, 13.10', 13.10" wandelt die ersten Beschleunigungssignale S1 in elektrische Spannungen. Gewandelte erste Beschleunigungssignale S1 liegen an einem Ausgang eines Transimpedanzwandlers 13.10, 13.10', 13.10" an. Vorzugsweise hat der Ausgang des Transimpedanzwandlers 13.10, 13.10', 13.10' eine niedrige Impedanz von kleiner 10²Ω. Bei Kenntnis der vorliegenden Erfindung kann der Fachmann anstatt eines Transimpedanzwandlers auch einen Ladungsverstärker mit einem niedrigen elektrischen Widerstand an einem Eingang des Ladungsverstärkers verwenden.

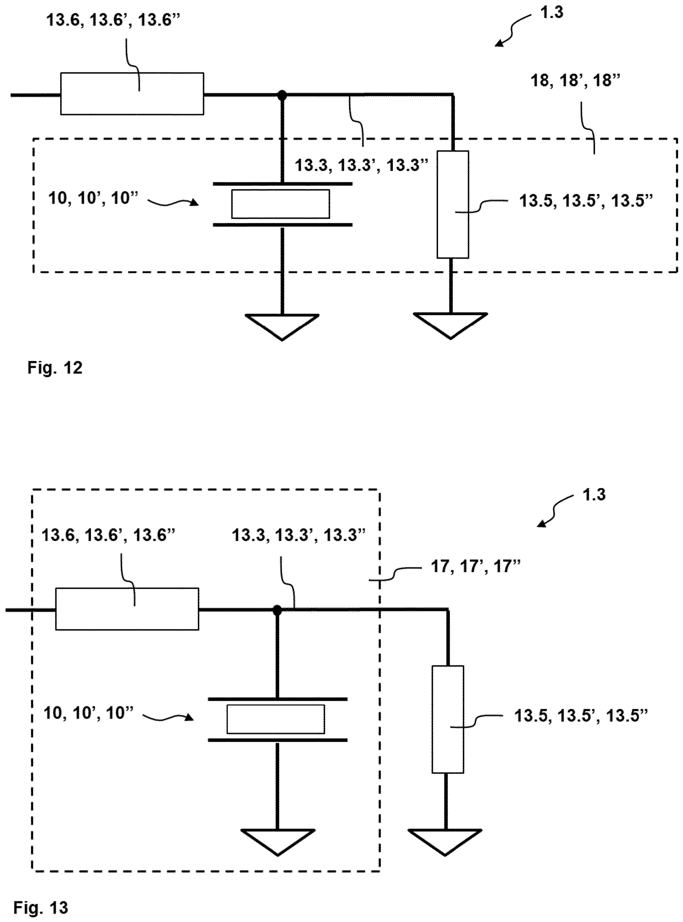

Fig. 12 zeigt eine schematische Darstellung eines Hochpassfilters 18, 18', 18" der Wandlereinheit 1.3. Vorzugsweise weist die Wandlereinheit 1.3 drei erste elektrische Widerstände 13.5, 13.5', 13.5"' auf. Die drei ersten elektrischen Widerstände 13.5, 13.5', 13.5" sind identisch aufgebaut.

In der Ausführungsform nach Fig. 1 und 2 ist der erste elektrische Widerstand 13.5, 13.5', 13.5" eine Widerstandsbeschichtung aus einem Widerstandsmaterial wie Al₂O₃, Keramik, Al₂O₃-Keramik, usw. Die Widerstandsbeschichtung erfolgt durch chemische Gasphasenabscheidung, physikalische Gasphasenabscheidung, usw. Die Widerstandsbeschichtung ist eine elektrische Widerstand-Dünnschicht. Auch die Widerstandsbeschichtung ist eine "Dünnschicht" im Sinne der Erfindung, sie weist senkrecht zur flächigen Ausdehnung eine Dicke von vorzugsweise kleiner 0.1mm auf. Die Widerstandsbeschichtung wird direkt auf die erste normale Seitenfläche 12.7 (erste Ausführungsform des Beschleunigungsaufnehmers 1 nach Fig. 1 und 3) oder den Träger 13.7 (zweite Ausführungsform des Beschleunigungsaufnehmers 1 nach Fig. 2 und 4) aufgebracht und/oder die Widerstandsbeschichtung wird direkt auf die ersten und zweiten Grundkörper-Leiter 13.3, 13.3', 13.3'', 13.4, 13.4', 13.4"' aufgebracht. Die Widerstandsbeschichtung kann durch Schablonen, Photolithographie, Laserablation, usw. strukturiert sein.

In der Ausführungsform nach Fig. 2 und 4 ist der erste elektrische Widerstand 13.5, 13.5', 13.5" ein elektrisches Bauelement mit einem Widerstandsmaterial aus Keramik, Metalloxid, usw. und Anschlussdrähten.

Jeweils ein erster Grundkörper-Leiter 13.3, 13.3', 13.3"' kontaktiert einen ersten elektrischen Widerstand 13.5, 13.5', 13.5". Die Art und Weise der Kontaktierung ist beliebig. Jeweils ein erster elektrischer Widerstand 13.5, 13.5', 13.5" ist mit einem der drei Piezoelemente 10, 10', 10" elektrisch parallelgeschaltet. Diese Parallelschaltung bildet einen Hochpassfilter 18, 18', 18'', denn das erste, zweite oder dritte Piezoelement 10, 10', 10" ist eine elektrische Kapazität. Der Hochpassfilter 18, 18', 18" filtert Frequenzen unterhalb einer Grenzfrequenz. Vorzugsweise beträgt die Grenzfrequenz 10Hz. Zu Beginn der Erfassung einer Beschleunigung mit dem Beschleunigungsaufnehmers 1 kann eine Entladung des ersten, zweiten oder dritten Piezoelementes 10, 10', 10" zu niedrigen Störfrequenzen unterhalb der Grenzfrequenz führen. Die niedrigen Störfrequenzen liegen am Eingang des Transimpedanzwandlers 13.10, 13.10', 13.10" an und bilden eine undefinierte Zeitkonstante. Die niedrigen Störfrequenzen können die Erfassung der Beschleunigung verfälschen. Durch die Filterung der niedrigen Störfrequenzen erhält der Transimpedanzwandler 13.10, 13.10', 13.10" eine definierte Zeitkonstante. Über die Grösse des Wertes des ersten elektrischen Widerstandes 13.5, 13.5', 13.5" lässt sich die Grenzfrequenz einstellen.

Fig. 13 zeigt eine schematische Darstellung eines Tiefpassfilters 17, 17', 17" der Wandlereinheit 1.3. Vorzugsweise weist die Wandlereinheit 1.3 drei zweite elektrische Widerstände 13.6, 13.6', 13.6'' auf. Die drei zweiten elektrischen Widerstände 13.6, 13.6', 13.6" sind identisch aufgebaut. Der zweite elektrische Widerstand 13.6, 13.6', 13.6'' ist ein elektrisches Bauelement mit einem Widerstandsmaterial aus Keramik, Metalloxid, usw. und Anschlussdrähten. Jeweils ein erster Grundkörper-Leiter 13.3, 13.3', 13.3"' kontaktiert einen zweiten elektrischen Widerstand 13.6, 13.6', 13.6". Die Art und Weise der Kontaktierung ist beliebig. Jeweils ein zweiter elektrischer Widerstand 13.6, 13.6', 13.6" ist mit einem der drei Piezoelemente 10, 10', 10" elektrisch in Reihe geschaltet. Diese Reihenschaltung bildet einen Tiefpassfilter 17, 17', 17'', denn das erste, zweite oder dritte Piezoelement 10, 10', 10" ist eine elektrische Kapazität. Der Tiefpassfilter 17, 17', 17" filtert hohe Störfrequenzen unterhalb einer Eigenfrequenz des Beschleunigungsaufnehmers 1. Solche hohen Störfrequenzen entstehen durch mechanische Anregung des Beschleunigungsaufnehmers 1. Die hohen Störfrequenzen liegen am Eingang des Transimpedanzwandlers 13.10, 13.10', 13.10" an und können den Transimpedanzwandler 13.10, 13.10', 13.10" sättigen und so die Erfassung der Beschleunigung verfälschen. Je nach Grösse des Wertes des zweiten elektrischen Widerstandes 13.6, 13.6', 13.6" wird der Tiefpassfilter 17, 17', 17'' auf die Eigenfrequenz des Beschleunigungsaufnehmers 1 eingestellt.

Vorzugsweise weist die Wandlereinheit 1.3 drei erste Grundkörper-Abgangsleiter 13.8, 13.8', 13.8"' auf. Jeweils Ausgang eines Transimpedanzwandler 13.10, 13.10', 13.10" kontaktiert über einen ersten Grundkörper-Leiter 13.3, 13.3', 13.3''einen ersten Grundkörper-Abgangskontakt 13.08, 13.08', 13.08". Vorzugsweise weist die Wandlereinheit 1.3 einen zweiten Grundkörper-Abgangsleiter 13.9 auf. Die zweiten Grundkörper-Leiter 13.4, 13.4', 13.4" kontaktieren über einen zweiten Grundkörper-Abgangskontakt 13.09 den zweiten Grundkörper-Abgangsleiter 13.9. Die ersten und zweiten Grundkörper-Abgangskontakte 13.08, 13.08', 13.08'', 13.09 sind auf der ersten normalen Seitenfläche 12.7 (erste Ausführungsform des Beschleunigungsaufnehmers 1 nach Fig. 1 und 3) oder auf dem Träger 13.7 (zweite Ausführungsform des Beschleunigungsaufnehmers 1 nach Fig. 2 und 4) befestigt. Der erste und zweite Grundkörper-Abgangskontakt 13.08, 13.08', 13.08'', 13.09 sind ein Stoffschluss wie Drahtbonden, Löten, usw. Beim Drahtbonden eignen sich Verfahren wie Thermokompressionsbonden, Thermosonic-Ball-Wedge-Bonden, Ultraschall-Wedge-Wedge-Bonden usw. Die in Fig. 11 kreisförmigen ersten und zweiten Grundkörper-Abgangskontakte 13.08, 13.08', 13.08'', 13.09 stellen abgeformten Draht dar.

Die ersten Grundkörper-Abgangsleiter 13.8, 13.8', 13.8" leiten gewandelte erste Beschleunigungssignale S1 an den Signalausgang 1.4 ab. Der zweite Grundkörper-Abgangsleiter 13.9 leitet die Summe der zweiten Beschleunigungssignale S2 an den Signalausgang 1.4 ab.

Der Signalausgang 1.4 ist bereichsweise am Gehäuse 1.2 befestigt. Vorzugsweise ist der Signalausgang 1.4 gemäss den Ausführungsformen des Beschleunigungsaufnehmers 1 nach Fig. 1 und 2 ein elektrisches Kabel. Der Signalausgang 1.4 weist Signalleiter 14.1, 14.1', 14.1'', 14.2, einen Schutzmantel 14.3, einen Mantelflansch 14.4, eine elektrische Isolation 14.5 sowie Vergussmasse 14.6 auf.

Im Querschnitt gesehen, weist der Signalausgang 1.4 einen mehrlagigen Aufbau auf.

Die Signalleiter 14.1, 14.1', 14.1'', 14.2 bilden eine innere Lage. Vorzugsweise weist der Signalausgang 1.4 drei erste Signalleiter 14.1, 14.1', 14.1"' und einen zweiten Signalleiter 14.2 auf. Die Signalleiter 14.1, 14.1', 14.1'', 14.2 sind aus elektrisch leitfähigem Material wie Kupfer, Kupferlegierungen, Gold, Goldlegierungen, Aluminium, Aluminiumlegierungen, usw. Vorzugsweise weist jeder Signalleiter 14.1, 14.1', 14.1", 14.2 eine elektrische Isolationshülle auf. Die ersten und zweiten Grundkörper-Abgangsleitern 13.8, 13.8', 13.8", 13.9 kontaktiere erste und zweite Signalleiter 14.1, 14.1', 14.1", 14.2. Jeweils ein erster Grundkörper-Abgangsleiter 13.8, 13.8', 13.8" kontaktiert einen ersten Signalleiter 14.1, 14.1', 14.1''. Der zweite Grundkörper-Abgangsleiter 13.9 kontaktiert den zweiten Signalleiter 14.2.

Die elektrische Isolation 14.5 bildet eine mittlere Lage und ist um die Signalleiter 14.1, 14.1', 14.1'', 14.2 herum angeordnet. Die elektrische Isolation 14.5 isoliert die Signalleiter 14.1, 14.1', 14.1'', 14.2 elektrisch gegenüber dem Schutzmantel 14.3. Die elektrische Isolation 14.5 ist aus elektrisch isolierendem Material wie Al₂O₃, Keramik, Al₂O₃-Keramik, faserverstärkter Kunststoff, usw.

Der Schutzmantel 14.3 bildet eine äussere Lage. Der Schutzmantel 14.3 schützt die elektrische Isolation 14.5 sowie die Signalleiter 14.1, 14.1', 14.1'', 14.2 vor schädlichen Umwelteinflüssen wie Verunreinigungen (Staub, Feuchtigkeit, usw.) sowie vor elektromagnetischen Wellen, die zu unerwünschten Störeffekten bei den ersten und zweiten Beschleunigungssignalen S1, S2 führen können. Der Schutzmantel 14.3 ist aus mechanisch beständigem Material wie aus Metall, Kunststoff, usw.

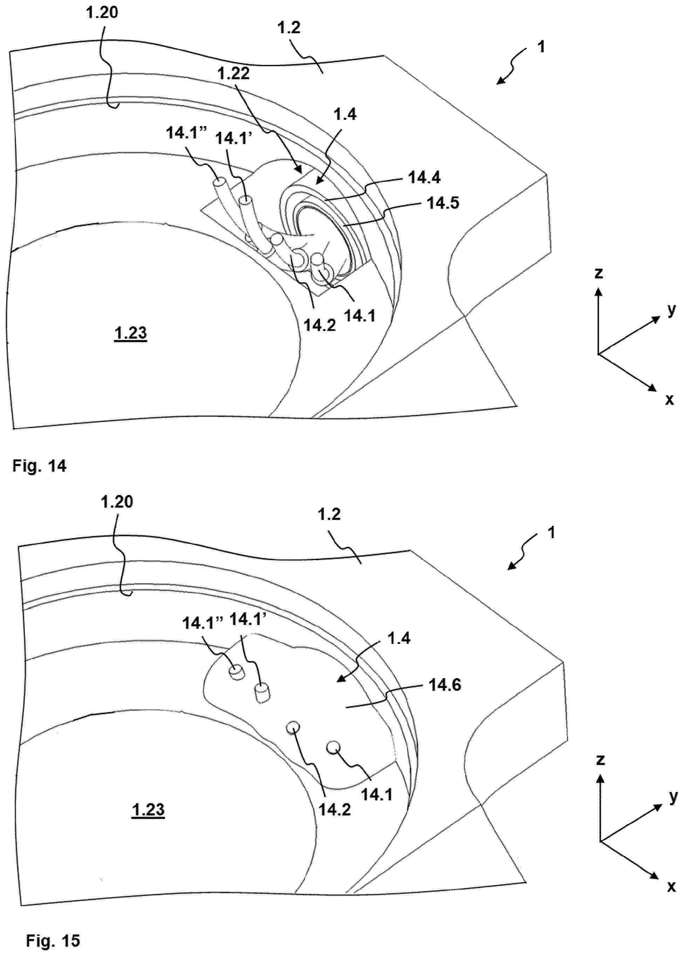

Die Fig. 14 bis 18 zeigen Schritte der Montage der Ausführungsform des Beschleunigungsaufnehmers 1 nach Fig. 2.

Fig. 14 zeigt einen ersten Schritt der Montage, bei dem Signalleiter 14.1, 14.1', 14.1'', 14.2 in das Gehäuse 1.2 geführt werden. Das Gehäuse 1.2 weist eine Signalausgang-Öffnung 1.22 auf. Vorzugsweise weist die Signalausgang-Öffnung 1.22 Form und Grösse des Aussendurchmessers des Schutzmantels 14.3 auf. Enden der Signalleiter 14.1, 14.1', 14.1'', 14.2 sind abisoliert, die elektrische Isolationshülle ist hier bereichsweise entfernt worden. Die Enden der Signalleiter 14.1, 14.1', 14.1", 14.2 ragen durch die Signalausgang-Öffnung 1.22 in ein Inneres des Gehäuses 1.2. Das Innere des Gehäuses 1.2 ist der Bereich um den Gehäuseboden 1.23.

Nach aussen hin ist die Signalausgang-Öffnung 1.22 durch den Schutzmantel 14.3 und den Mantelflansch 14.3 verschlossen. Vorzugsweise ist ein Ende des Schutzmantels 14.3 am Mantelflansch 14.4 befestigt. Der Mantelflansch 14.4 ist aus mechanisch beständigem Material wie aus Metall, Kunststoff, usw. Die Befestigung von Schutzmantel 14.3 und Mantelflansch 14.4 erfolgt durch Kraftschluss wie Crimpen, usw.

Der Metallflansch 14.4 wiederum wird stoffschlüssig am Gehäuse 1.2 befestigt. Vorzugsweise wird der Metallflansch 14.4 an einem vom Inneren des Gehäuses 1.2 abgewandten äusseren Rand der Gehäuseöffnung 1.22 befestigt. Der Stoffschluss erfolgt durch Schweissen, Löten, Kleben, usw. Die Befestigung des Mantelflanschs 14.4 am Gehäuse 1.2 bewirkt eine Zugentlastung des Schutzmantels 14.3. Aufgrund der Zugentlastung des Schutzmantels 14.3 können mechanische Belastungen vom Schutzmantel 14.3 nicht in das Innere des Gehäuses 1.2 übertragen werden und zur Wandlereinheit 1.3 gelangen und dort zu Beschädigungen wie ein Abreissen oder Anreissen von Grundkörper-Abgangsleitern 13.8, 13.8', 13.8'', 13.9 führen. Solche mechanische Belastungen stammen von Verdrehungen, Verzwirbelungen, usw. des Schutzmantels 14.3 um dessen längliche Ausdehnungsachse.

Fig. 15 zeigt einen zweiten Schritt der Montage, bei dem die Signalleiter 14.1, 14.1', 14.1'', 14.2 im Gehäuse 1.2 mit Vergussmasse 14.6 vergossen werden. Durch die Gehäuseöffnung 1.20 hindurch wird Vergussmasse 14.6 auf die Signalleiter 14.1, 14.1', 14.1", 14.2 in der Signalausgang-Öffnung 1.21 aufgebracht. Die Vergussmasse 14.6 ist ein chemisch härtender Klebstoff oder ein physikalisch abbindbarer Klebstoff oder eine Kombination aus einem chemisch härtenden Klebstoff und einem physikalisch abbindbaren Klebstoff. Vorzugsweise besteht die Vergussmasse 14.6 aus Klebstoff wie Epoxid, Polyurethan, Cyanacrylat, Methylmethacrylat, usw. Die Vergussmasse 14.6 ist ein elektrischer Isolator mit einem spezifischen elektrischen Widerstand von grösser 10¹²Ωmm²/m. Vorzugsweise wird so viel Vergussmasse 14.6 auf die Signalleiter 14.1, 14.1', 14.1", 14.2 in der Signalausgang-Öffnung 1.21 aufgebracht, dass die Signalausgang-Öffnung 1.21 vollständig verschlossen ist.

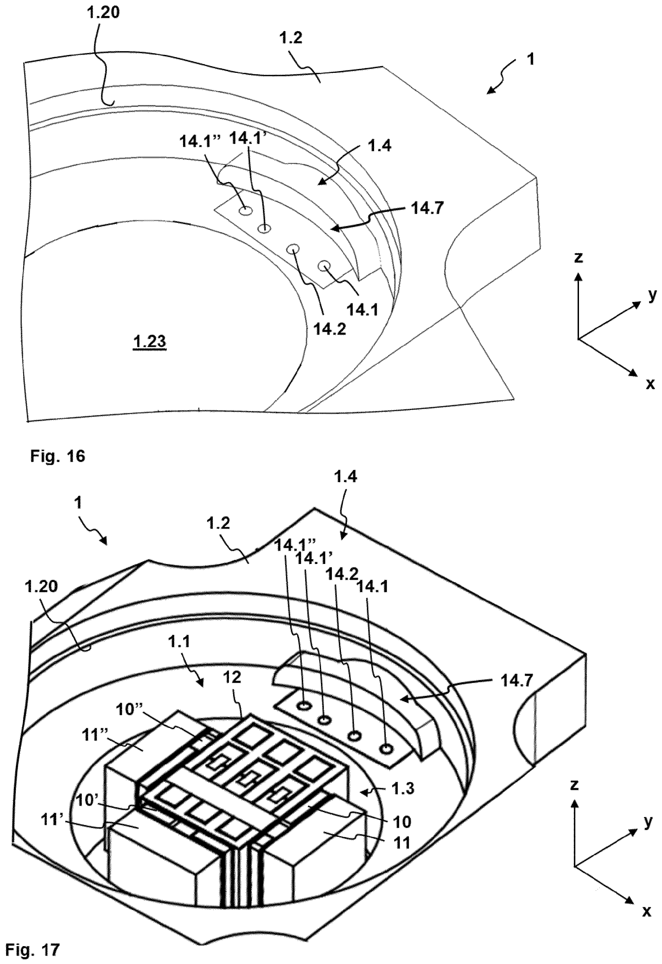

Fig. 16 zeigt einen dritten Schritt der Montage, bei dem die mit Vergussmasse 14.6 vergossenen Signalleiter 14.1, 14.1', 14.1", 14.2 im Gehäuse 1.2 bereichsweise freigelegt werden. Die Freilegung 14.7 der Signalleiter 14.1, 14.1', 14.1", 14.2 erfolgt durch ein geeignetes Schneidwerkzeug wie ein Schneidekeil, ein Fräser, usw. Das Schneidwerkzeug wird durch die Gehäuseöffnung 1.20 in das Innere des Gehäuses 1.2 geführt und schneidet die Enden der Signalleiter 14.1, 14.1', 14.1", 14.2 und einen Bereich der ausgehärteten Vergussmasse 14.6 ab. Die Freilegung 14.7 erfolgt in einer von der Querachse x und der Längsachse y aufgespannten Ebene. Im Bereich der Freilegung 14.7 liegen Stirnflächen von abgeschnittenen Enden der Signalleiter 14.1, 14.1', 14.1'', 14.2 in einer Ebene frei. Vorzugsweise erstreckt sich die Ebene parallel zur Gehäuseöffnung 1.20. Im Bereich der Freilegung 14.7 sind Mantelflächen der Signalleiter 14.1, 14.1', 14.1'', 14.2 vollständig von Vergussmasse 14.6 umgeben. Die Vergussmasse 14.6 befestigt die Signalleiter 14.1, 14.1', 14.1'', 14.2 zugentlastet. Aufgrund der Zugentlastung der Signalleiter 14.1, 14.1', 14.1'', 14.2 können mechanische Belastungen von den Signalleitern 14.1, 14.1', 14.1", 14.2 nicht in das Innere des Gehäuses 1.2 übertragen werden und zur Wandlereinheit 1.3 gelangen und dort zu Beschädigungen wie ein Abreissen oder Anreissen von Grundkörper-Abgangsleitern 13.8, 13.8', 13.8", 13.9 führen. Solche mechanische Belastungen stammen von Verdrehungen, Verzwirbelungen, usw. der Signalleiter 14.1, 14.1', 14.1'', 14.2 um deren längliche Ausdehnungsachse. Und die Vergussmasse 14.6 verschliesst die Signalausgang-Öffnung 1.21 gasdicht. Der gasdichte Verschluss der Signalausgang-Öffnung 1.21 verhindert ein Eindringen von Feuchtigkeit über die Signalleiter 14.1, 14.1', 14.1", 14.2 in das Innere des Gehäuses 1.2 zur Aufnehmereinheit 1.1, wo Feuchtigkeit eine Funktionsfähigkeit der Piezoelemente 10, 10', 10" beeinträchtigen kann, denn piezoelektrisches Material wie Quarz ist stark hygroskopisch.

Fig. 17 zeigt einen vierten Schritt der Montage, bei dem die Aufnehmereinheit 1.1 in das Gehäuse 1.2 gesetzt wird. Die Aufnehmereinheit 1.1 mit Wandlereinheit 1.3 wird durch die Gehäuseöffnung 1.20 in das Innere des Gehäuses 1.2 geführt. Die zweite normale Seitenfläche 12.6 wird über Stoffschluss wie Kleben, Löten, usw. am Gehäuseboden 1.23 befestigt. Vorzugsweise wird die Aufnehmereinheit 1.1 so ausgerichtet, dass die vierte tangentiale Seitenfläche 12.4 räumlich nahe zur Freilegung 14.7 liegt.

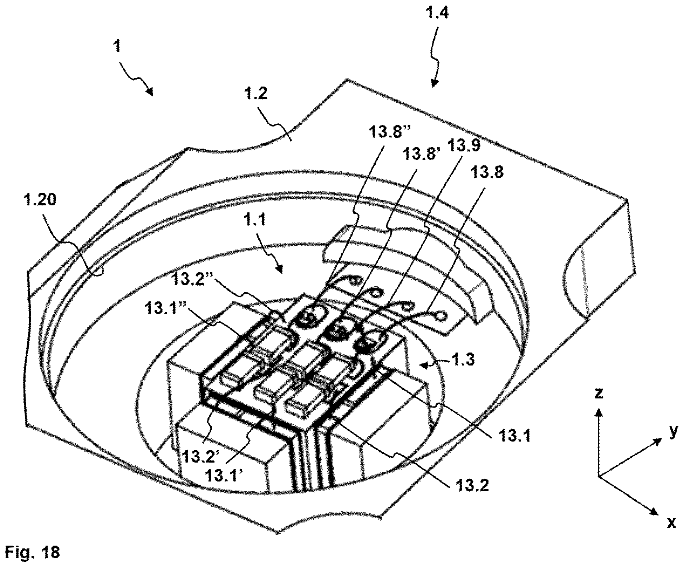

Fig. 18 zeigt einen fünften Schritt der Montage, bei dem die Wandlereinheit 1.3 der Aufnehmereinheit 1.1 kontaktiert wird. Die Kontaktierung der Wandlereinheit 1.3 erfolgt durch ein geeignetes Kontaktierwerkzeug wie ein Drahtbonder, usw. Das Kontaktierwerkzeug wird durch die Gehäuseöffnung 1.20 in das Innere des Gehäuses 1.2 geführt. Das Kontaktierwerkzeug verbindet erste und zweite Grundkörper-Leiter 13.3, 13.3', 13.3", 13.4, 13.4', 13.4" der Wandlereinheit 1.3 über erste und zweite Piezoelement-Leiter 13.1, 13.1', 13.1", 13.2, 13.2', 13.2" mit der ersten Mantelfläche 130 des ersten, zweiten oder dritten Piezoelements 10, 10', 10''. Und das Kontaktierwerkzeug verbindet erste und zweite Grundkörper-Leiter 13.3, 13.3', 13.3'', 13.4, 13.4', 13.4" der Wandlereinheit 1.3 über erste und zweite Grundkörper-Abgangsleiter 13.8, 13.8', 13.8'', 13.9 mit den Signalleiter 14.1, 14.1', 14.1", 14.2 des Signalausgangs 1.4.

Vorzugsweise werden die ersten und zweiten Grundkörper-Abgangsleiter 13.8, 13.8', 13.8", 13.9 direkt mit Stirnflächen von abgeschnittenen Enden der Signalleiter 14.1, 14.1', 14.1'', 14.2 kontaktiert. Diese direkte Kontaktierung der ersten und zweiten Grundkörper-Abgangsleiter 13.8, 13.8', 13.8'', 13.9 mit den Signalleitern 14.1, 14.1', 14.1'', 14.2 hat den Vorteil, dass keine weiteren Tragmittel wie eine Leiterplatte, usw. notwendig sind, was die Abmessungen und das Gewicht des Beschleunigungsaufnehmers niedrig hält und die Montage des Beschleunigungsaufnehmers einfach und kostengünstig gestaltet. Diese direkte Kontaktierung der ersten und zweiten Grundkörper-Abgangsleiter 13.8, 13.8', 13.8", 13.9 mit den Signalleitern 14.1, 14.1', 14.1'', 14.2 hat den weiteren Vorteil, dass die Wandlereinheit 1.3 durch die mechanisch flexiblen Grundkörper-Abgangsleiter 13.8, 13.8', 13.8", 13.9 zugentlastet mit den Signalleitern 14.1, 14.1', 14.1", 14.2 kontaktiert sind, denn die mechanisch flexiblen Grundkörper-Abgangsleiter 13.8, 13.8', 13.8", 13.9 dämpfen mechanische Belastungen, die bis zu den Signalleitern 14.1, 14.1', 14.1", 14.2 gelangt sind.

Nachdem die elektrische Kontaktierung Wandlereinheit 1.3 abgeschlossen ist, wird die Gehäuseöffnung 1.20 mit dem Gehäusedeckel 1.21 gasdicht verschlossen. Der Verschluss erfolgt durch Stoffschluss wie Schweissen, Löten, Kleben, usw.

### Bezugszeichenliste

- 1: Beschleunigungsaufnehmer
- 1.1: Aufnehmereinheit
- 1.2: Gehäuse
- 1.20: Gehäuseöffnung
- 1.21: Gehäusedeckel
- 1.22: Signalausgang-Öffnung
- 1.23: Gehäuseboden
- 1.24: Montagespalt
- 1.3: Wandlereinheit
- 1.4: Signalausgang
- 10, 10', 10'': Piezoelement
- 11, 11', 11": seismische Masse
- 12: Grundkörper
- 12.1, 12.2, 12.3, 12.4: tangentiale Seitenfläche
- 12.6, 12.7: normale Seitenfläche
- 13.01, 13.01', 13.01": erster Piezoelement-Kontakt
- 13.02, 13.02', 13.02": zweiter Piezoelement-Kontakt
- 13.03, 13.03', 13.03": erster Grundkörper-Zugangskontakt
- 13.04, 13.04', 13.04": zweiter Grundkörper-Zugangskontakt
- 13.08, 13.08', 13.08": erster Grundkörper-Abgangskontakt
- 13.09: zweiter Grundkörper-Abgangskontakt
- 13.1, 13.1', 13.1": erste Piezoelement-Leiter
- 13.2, 13.2', 13.2": zweite Piezoelement-Leiter
- 13.3, 13.3', 13.3": erster Grundkörper-Leiter
- 13.4, 13.4', 13.4": zweiter Grundkörper-Leiter
- 13.5, 13.5', 13.5": erster elektrischer Widerstand
- 13.6, 13.6', 13.6": zweiter elektrischer Widerstand
- 13.7: Träger
- 13.8, 13.8', 13.8": erster Grundkörper-Abgangsleiter
- 13.9: zweiter Grundkörper-Abgangsleiter
- 13.10, 13.10', 13.10": Transimpedanzwandler
- 14.1, 14.1', 14.1": erster Signalleiter
- 14.2: zweiter Signalleiter
- 14.3: Schutzmantel
- 14.4: Mantelflansch
- 14.5: elektrische Isolation
- 14.6: Vergussmasse
- 14.7: Freilegung
- 15, 15', 15": inneres Verbindungsmittel
- 16, 16', 16": äusseres Verbindungsmittel
- 17, 17', 17": Tiefpassfilter
- 18, 18', 18'': Hochpassfilter
- 101: erste elektrische Leitbeschichtung
- 102: zweite elektrische Leitbeschichtung
- 110, 120: Stirnfläche
- 111, 111': erste elektrisch leitende Stirnbeschichtung
- 112, 112', 112": erster unbeschichteter Stirnbereich
- 121 - 121‴: zweite elektrisch leitende Stirnbeschichtung
- 122, 122', 122": zweiter unbeschichteter Stirnbereich
- 130, 140, 150, 160: Mantelfläche
- 131, 131': erste elektrisch leitende Mantelbeschichtung
- 132, 132' - 132"": erster unbeschichteter Mantelbereich
- 133, 133': weitere erste elektrisch leitende Mantelbeschichtung
- 141: zweite elektrisch leitende Mantelbeschichtung
- 142, 142', 142": zweiter unbeschichteter Mantelbereich
- 151, 151': dritte elektrisch leitende Mantelbeschichtung
- 161: vierte elektrisch leitende Mantelbeschichtung
- a: Normalachse
- F: Kraft
- h: Haupttangentialachse
- n: Nebentangentialachse
- S1, S2: Beschleunigungssignale
- x: Querachse
- y: Längsachse
- z: Vertikalachse

## Patentansprüche

1. Beschleunigungsaufnehmer (1) mit mindestens einem Piezoelement (10, 10', 10"), mit mindestens einer seismischen Masse (11, 11', 11'') und mit einem Grundkörper (12);
welcher Beschleunigungsaufnehmer (1) in einem rechtwinkligen Koordinatensystem mit drei Achsen (x, y, z) angeordnet ist, wobei die drei Achsen (x, y, z) eine Querachse (x), eine Längsachse (y) und eine Vertikalachse (z) umfassen;
welcher Grundkörper (12) tangentiale Seitenflächen (12.1, 12.2, 12.3, 12.4) und normale Seitenflächen (12.6, 12.7) aufweist, welche tangentialen Seitenflächen (12.1, 12.2, 12.3, 12.4) tangential zur Vertikalachse (z) angeordnet sind, und welche normalen Seitenflächen (12.6, 12.7) normal zur Vertikalachse (z) angeordnet sind;
**dadurch gekennzeichnet, dass** an mindestens einer der tangentialen Seitenflächen (12.1, 12.2, 12.3) genau ein Piezoelement (10, 10', 10") befestigt ist;
dass an dem einen Piezoelement (10, 10', 10") genau eine seismische Masse (11, 11', 11") befestigt ist und bei Beschleunigung eine der Beschleunigung proportionale Scherkraft auf das Piezoelement (10, 10', 10") ausübt, welche Scherkraft entlang einer der drei Achsen (x, y, z) als Haupttangentialachse (h) wirkt;
dass das eine Piezoelement (10, 10', 10") Stirnflächen (110, 120) aufweist, jede Stirnfläche (110, 120) liegt in einer von der Haupttangentialachse (h) und einer Nebentangentialachse (n) aufgespannten Ebene, welche Nebentangentialachse (n) in der Ebene senkrecht auf der Haupttangentialachse (h) steht, und mit einer Normalachse (a), welche normal zur Ebene steht;
dass das eine Piezoelement (10, 10', 10") unter der Wirkung der Scherkraft entlang der Haupttangentialachse (h) auf den Stirnflächen (110, 120) piezoelektrische Ladungen erzeugt;
dass die an dem einen Piezoelement (10, 10', 10") befestigte seismische Masse (11, 11', 11") bei Beschleunigung eine der Beschleunigung proportionale Scherkraft entlang der Nebentangentialachse (n) auf das Piezoelement (10, 10', 10") ausübt, welches Piezoelement (10, 10', 10") unter der Wirkung der Scherkraft entlang der Nebentangentialachse (n) auf den Stirnflächen (110, 120) piezoelektrische Störladungen erzeugt;
dass das eine Piezoelement (10, 10', 10") mindestens eine Stirnfläche (110, 120) mit mindestens einer elektrisch leitenden Stirnbeschichtung (111, 121) aufweist; dass die elektrisch leitende Stirnbeschichtung (111, 121) für die Scherkraft entlang der Haupttangentialachse (h) piezoelektrische Ladungen abgreift; und dass die elektrisch leitende Stirnbeschichtung (111, 121) für die Scherkraft entlang der Nebentangentialachse (n) piezoelektrische Störladungen abgreift;
dass das eine Piezoelement (10, 10', 10") Mantelflächen (130, 140, 150, 160) aufweist, welche parallel zur Normalachse (a) liegen;
dass die an dem einen Piezoelement (10, 10', 10") befestigte seismische Masse (11, 11', 11") bei Beschleunigung eine der Beschleunigung proportionale Normalkraft entlang der Normalachse (a) auf das Piezoelement (10, 10', 10") ausübt, welches Piezoelement (10, 10', 10'') unter der Wirkung der Normalkraft entlang der Normalachse (a) auf den Mantelflächen (130, 140, 150, 160) piezoelektrische Störladungen erzeugt;
dass das eine Piezoelement (10, 10', 10") mindestens eine Mantelfläche (130, 140, 150, 160) mit bereichsweise mindestens einer elektrisch leitenden Mantelbeschichtung (131, 133, 141, 151, 161) aufweist; und dass die elektrisch leitende Mantelbeschichtung (131, 133, 141, 151, 161) für die Normalkraft entlang der Normalachse (a) piezoelektrische Störladungen abgreift.

2. Beschleunigungsaufnehmer (1) nach Anspruch 1, **dadurch gekennzeichnet, dass** das eine Piezoelement (10, 10', 10") eine hohe Empfindlichkeit für die von der an ihm befestigten seismischen Masse (11, 11', 11'') ausgeübte Scherkraft entlang der Haupttangentialachse (h) aufweist;
dass das eine Piezoelement (10, 10', 10") eine geringe Empfindlichkeit für die von der an ihm befestigten seismischen Masse (11, 11', 11") ausgeübte Scherkraft entlang der Nebentangentialachse (n) aufweist; und
dass das eine Piezoelement (10, 10', 10") eine geringe Empfindlichkeit für die von der an ihm befestigten seismischen Masse (11, 11', 11") ausgeübte Normalkraft entlang der Normalachse (a) aufweist.

3. Beschleunigungsaufnehmer (1) nach einem der Ansprüche 1 oder 2, **dadurch gekennzeichnet, dass** das eine Piezoelement (10) eine hohe Empfindlichkeit für eine Scherkraft entlang der Längsachse (y) als Haupttangentialachse (h), eine geringe Empfindlichkeit für eine Scherkraft entlang der Vertikalachse (z) als Nebentangentialachse (n) und eine geringe Empfindlichkeit für eine Normalkraft entlang der Querachse (x) als Normalachse (a) aufweist;
und/oder dass das eine Piezoelement (10') eine hohe Empfindlichkeit für eine Scherkraft entlang der Querachse (x) als Haupttangentialachse (h), eine geringe Empfindlichkeit für eine Scherkraft entlang der Vertikalachse (z) als Nebentangentialachse (n) und eine geringe Empfindlichkeit für eine Normalkraft entlang der Längsachse (y) als Normalachse (a) aufweist;
und/oder dass das eine Piezoelement (10") eine hohe Empfindlichkeit für eine Scherkraft entlang der Vertikalachse (z) als Haupttangentialachse (h), eine geringe Empfindlichkeit für eine Scherkraft entlang der Längsachse (y) als Nebentangentialachse (n) und eine geringe Empfindlichkeit für eine Normalkraft entlang der Querachse (x) als Normalachse (a) aufweist.

4. Beschleunigungsaufnehmer (1) nach einem der Ansprüche 1 bis 3, **dadurch gekennzeichnet, dass** das eine Piezoelement (10, 10', 10") mit einer hohen Empfindlichkeit für eine Scherkraft entlang der Haupttangentialachse (h) um mindestens einen Faktor 5 mehr piezoelektrische Ladungen pro Krafteinheit erzeugt als mit einer geringen Empfindlichkeit für die Scherkraft entlang der Nebentangentialachse (n) oder als mit einer geringen Empfindlichkeit für die Normalkraft entlang der Normalachse (a).

5. Beschleunigungsaufnehmer (1) nach einem der Ansprüche 1 bis 4, **dadurch gekennzeichnet, dass** für das eine Piezoelement (10, 10', 10") die elektrisch leitende Stirnbeschichtung (111, 121) und die elektrisch leitende Mantelbeschichtung (131, 133, 141, 151, 161) eine zusammenhängende elektrische Leitbeschichtung (101, 102) bilden; und dass die für die Scherkraft entlang der Nebentangentialachse (n) abgegriffenen piezoelektrischen Störladungen entgegengesetzte Polarität haben, wie die für die Normalkraft entlang der Normalachse (a) abgegriffenen piezoelektrischen Störladungen.

6. Beschleunigungsaufnehmer (1) nach Anspruch 5, **dadurch gekennzeichnet, dass** für das eine Piezoelement (10, 10', 10") eine Grösse der elektrisch leitenden Mantelbeschichtung (131, 133, 141, 151, 161) einstellbar ist; dass die Grösse der elektrisch leitenden Mantelbeschichtung (131, 133, 141, 151, 161) so eingestellt ist, dass die zusammenhängende elektrische Leitbeschichtung (101, 102) für die Scherkraft entlang der Nebentangentialachse (n) weitgehend gleich viele piezoelektrische Störladungen abgreift, wie für die Normalkraft entlang der Normalachse (a).

7. Beschleunigungsaufnehmer (1) nach einem der Ansprüche 5 oder 6, **dadurch gekennzeichnet, dass** für das eine Piezoelement (10, 10', 10") die Mantelfläche (130, 140, 150, 160) eine erste Mantelfläche (130) aufweist, welche erste Mantelfläche (130) normal zur Nebentangentialachse (n) des Piezoelementes (10, 10', 10") liegt; dass die erste Mantelfläche (130) eine erste elektrisch leitende Mantelbeschichtung (131) und eine weitere erste elektrisch leitende Mantelbeschichtung (133) aufweist; dass ein Verhältnis einer Grösse der ersten elektrisch leitenden Mantelbeschichtung (131) zu einer Grösse der weiteren ersten elektrisch leitenden Mantelbeschichtung (133) einstellbar ist; dass das Verhältnis der Grösse der ersten elektrisch leitenden Mantelbeschichtung (131) zur Grösse der weiteren ersten elektrisch leitenden Mantelbeschichtung (133) so eingestellt ist, dass die zusammenhängende elektrische Leitbeschichtung (101, 102) für die Scherkraft entlang der Nebentangentialachse (n) weitgehend gleich viele piezoelektrische Störladungen abgreift, wie für die Normalkraft entlang der Normalachse (a).

8. Beschleunigungsaufnehmer (1) nach Anspruch 7, **dadurch gekennzeichnet, dass** der Beschleunigungsaufnehmer (1) erste und zweite Piezoelement-Leiter (13.1, 13.1', 13.1", 13.2, 13.2', 13.2") aufweist; dass für das eine Piezoelement (10, 10', 10'') die erste elektrisch leitende Mantelbeschichtung (131) stoffschlüssig mit dem ersten Piezoelement-Leiter (13.1, 13.1', 13.1") verbunden ist; dass für das eine Piezoelement (10, 10', 10'') die weitere erste elektrisch leitende Mantelbeschichtung (133) stoffschlüssig mit dem zweiten Piezoelement-Kontakt (13.2, 13.2', 13.2") verbunden ist; dass der erste Piezoelement-Leiter (13.1, 13.1', 13.1'') piezoelektrische Ladungen von der ersten zusammenhängenden elektrischen Leitbeschichtung (101) als erste Beschleunigungssignale (S1) ableitet; und dass der zweite Piezoelement-Leiter (13.2, 13.2', 13.2") piezoelektrische Ladungen von der zweiten zusammenhängenden elektrischen Leitbeschichtung (102) als zweite Beschleunigungssignale (S2) ableitet.

9. Beschleunigungsaufnehmer (1) nach einem der Ansprüche 1 bis 8, **dadurch gekennzeichnet, dass** für das eine Piezoelement (10, 10', 10'') die elektrisch leitende Stirnbeschichtung (111, 121) stoffschlüssig auf der Stirnfläche (110, 120) aufliegt und mikroskopisch kleine Poren in der Stirnfläche (110, 120) schliesst; dass die elektrisch leitende Mantelbeschichtung (131, 133, 141, 151, 161) stoffschlüssig auf der Mantelfläche (130, 140, 150, 160) aufliegt und mikroskopisch kleine Poren in der Mantelfläche (130, 140, 150, 160) schliesst; und dass durch den Verschluss der und mikroskopisch kleine Poren keine mechanische Vorspannung des Piezoelementes (10, 10', 10") nötig ist.

10. Beschleunigungsaufnehmer (1) nach einem der Ansprüche 1 bis 9, **dadurch gekennzeichnet, dass** die Stirnflächen (110, 120) des mindestens einen Piezoelementes (10, 10', 10") eine erste Stirnfläche (110) und eine zweite Stirnfläche (120) aufweisen, welche erste und zweite Stirnfläche (110, 120) zur Normalachse (a) des Piezoelementes (10, 10', 10") entgegengesetzt ausgerichtet sind; dass die erste Stirnfläche (110) eine erste elektrisch leitende Stirnbeschichtung (111) aufweist; dass die zweite Stirnfläche (120) eine zweite elektrisch leitende Stirnbeschichtung (121) aufweist; dass die Mantelfläche (130, 140, 150, 160) eine erste Mantelfläche (130) aufweist, welche erste Mantelfläche (130) normal zur Nebentangentialachse (n) des Piezoelementes (10, 10', 10") liegt; dass die erste Mantelfläche (130) eine erste elektrisch leitende Mantelbeschichtung (131) und eine weitere erste elektrisch leitende Mantelbeschichtung (133) aufweist; dass die erste elektrisch leitende Stirnbeschichtung (111) und die erste elektrisch leitende Mantelbeschichtung (131) eine erste zusammenhängende elektrische Leitbeschichtung (101) bilden; und dass die zweite elektrisch leitende Stirnbeschichtung (121) und die weitere erste elektrisch leitende Mantelbeschichtung (133) eine zweite zusammenhängende elektrische Leitbeschichtung (102) bilden.

11. Beschleunigungsaufnehmer (1) nach Anspruch 10, **dadurch gekennzeichnet, dass** die Mantelflächen (130, 140, 150, 160) des einen Piezoelementes (10, 10', 10") mindestens eine zweite Mantelfläche (140) und mindestens eine dritte Mantelfläche (150) aufweisen, welche zweite und dritte Mantelfläche (140, 150) normal zur Haupttangentialachse (h) des Piezoelementes (10, 10', 10") liegen; dass die zweite Mantelfläche (140) eine zweite elektrisch leitende Mantelbeschichtung (141) aufweist; dass die dritte Mantelfläche (150) eine dritte elektrisch leitende Mantelbeschichtung (151) aufweist; und dass die zweite und dritte elektrisch leitende Mantelbeschichtung (141, 151) Teil der ersten zusammenhängenden elektrischen Leitbeschichtung (101) oder Teil der zweiten zusammenhängenden elektrischen Leitbeschichtung (102) sind.

12. Beschleunigungsaufnehmer (1) nach Anspruch 10, **dadurch gekennzeichnet, dass** die Mantelflächen (130, 140, 150, 160) des einen Piezoelementes (10, 10', 10") mindestens eine zweite Mantelfläche (140) und mindestens eine dritte Mantelfläche (150) aufweisen, welche zweite und dritte Mantelfläche (140, 150) normal zur Haupttangentialachse (h) des Piezoelementes (10, 10', 10") liegen; dass die zweite Mantelfläche (140) eine zweite elektrisch leitende Mantelbeschichtung (141) aufweist; dass die dritte Mantelfläche (150) eine dritte elektrisch leitende Mantelbeschichtung (151) aufweist; dass die dritte elektrisch leitende Mantelbeschichtung (151) Teil der ersten zusammenhängenden elektrischen Leitbeschichtung (101) ist und dass die zweite elektrisch leitende Mantelbeschichtung (141) Teil der zweiten zusammenhängenden elektrischen Leitbeschichtung (102) ist.

13. Beschleunigungsaufnehmer (1) nach Anspruch 10, **dadurch gekennzeichnet, dass** die Mantelflächen (130, 140, 150, 160) des einen Piezoelementes (10, 10', 10") mindestens eine zweite Mantelfläche (140) und mindestens eine vierte Mantelfläche (160) aufweisen, welche zweite Mantelfläche (140) normal zur Hauttangentialachse (h) des Piezoelementes (10, 10', 10") liegt, welche vierte Mantelfläche (160) normal zur Nebentangentialachse (n) des Piezoelementes (10, 10', 10") liegt; dass die zweite Mantelfläche (140) eine zweite elektrisch leitende Mantelbeschichtung (141) aufweist; dass die vierte Mantelfläche (160) eine vierte elektrisch leitende Mantelbeschichtung (161) aufweist; und dass die zweite und vierte elektrisch leitende Mantelbeschichtung (141, 161) Teil der ersten zusammenhängenden elektrischen Leitbeschichtung (101) oder Teil der zweiten zusammenhängenden elektrischen Leitbeschichtung (102) sind.

14. Beschleunigungsaufnehmer (1) nach Anspruch 10, **dadurch gekennzeichnet, dass** die Mantelflächen (130, 140, 150, 160) des einen Piezoelementes (10, 10', 10") mindestens eine dritte Mantelfläche (150) und mindestens eine vierte Mantelfläche (160) aufweist, welche dritte Mantelfläche (150) normal zur Hauttangentialachse (h) des Piezoelementes (10, 10', 10") liegt, welche vierte Mantelfläche (160) normal zur Nebentangentialachse (n) des Piezoelementes (10, 10', 10") liegt; dass die dritte Mantelfläche (150) eine dritte elektrisch leitende Mantelbeschichtung (151) aufweist; dass die vierte Mantelfläche (160) eine vierte elektrisch leitende Mantelbeschichtung (161) aufweist; dass die dritte elektrisch leitende Mantelbeschichtung (151) Teil der ersten zusammenhängenden elektrischen Leitbeschichtung (101) ist und dass die vierte elektrisch leitende Mantelbeschichtung (161) Teil der zweiten zusammenhängenden elektrischen Leitbeschichtung (102) ist.
